(19) Europäisches Patentamt
European Patent Office
Office européen des brevets

(11) **EP 4 546 690 A1**

(12) **EUROPEAN PATENT APPLICATION**
published in accordance with Art. 153(4) EPC

(43) Date of publication:
**30.04.2025  Bulletin 2025/18**

(21) Application number: **23838639.5**

(22) Date of filing: **15.06.2023**

(51) International Patent Classification (IPC):
**H04L 5/00** (2006.01)

(52) Cooperative Patent Classification (CPC):
**H04L 5/00; H04W 28/26; H04W 72/0453**

(86) International application number:
**PCT/CN2023/100494**

(87) International publication number:
**WO 2024/012145 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.07.2022  CN 202210834017**

(71) Applicant: **Huawei Technologies Co., Ltd.**
**Shenzhen, Guangdong 518129 (CN)**

(72) Inventors:
• **WANG, Xiaolu**
**Shenzhen, Guangdong 518129 (CN)**

• **QIAO, Yunfei**
**Shenzhen, Guangdong 518129 (CN)**
• **DU, Yinggang**
**Shenzhen, Guangdong 518129 (CN)**
• **LUO, Hejia**
**Shenzhen, Guangdong 518129 (CN)**
• **LI, Rong**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57) Embodiments of this application provide a communication method and apparatus, to apply a TR technology in an NR system. The method includes: determining a reserved carrier in a BWP based on a TR pattern and a first correspondence, where the TR pattern includes a set of subcarriers used as reserved carriers, and the first correspondence is a correspondence between an index of a subcarrier and an index based on a first CRB; and outputting a time domain signal based on the reserved carrier in the BWP. An index of the TR pattern converts to start counting by using a 1st subcarrier of the first CRB as a start subcarrier. This helps align understanding of a quantity of reserved carriers and/or locations of the reserved carriers in the BWP at a transmitting end and a receiving end, and therefore helps reduce impact of the reserved carrier on NR system communication.

FIG. 5

**Description**

**CROSS-REFERENCE TO RELATED APPLICATIONS**

This application claims priority to Chinese Patent Application No. 202210834017.1, filed with the China National Intellectual Property Administration on July 14, 2022 and entitled "COMMUNICATION METHOD AND APPARATUS", which is incorporated herein by reference in its entirety.

**TECHNICAL FIELD**

Embodiments of this application relate to the field of communication technologies, and in particular, to a communication method and apparatus.

**BACKGROUND**

Currently, during communication, it is usually required that a high power amplifier (high power amplifier, HPA) at a transmitting end operate near a linear saturation region, to improve power efficiency of the HPA. If a system performs data transmission by using a signal with a waveform having a high peak-to-average power ratio (peak-to-average power ratio, PAPR), for example, an orthogonal frequency division multiplexing (orthogonal frequency division multiplexing, OFDM) waveform, when the HPA operates near a saturation point, a signal that is input to the HPA may enter a non-linear region, and therefore non-linear distortion occurs. The non-linear distortion introduces in-band distortion and out-of-band radiation, which affects decoding accuracy of a receiving end and causes interference to a user on an adjacent channel.

A tone reservation (tone reservation, TR) technology may be used to suppress the PAPR of the waveform. To be specific, the transmitting end reserves some subcarriers to carry signals for PAPR suppression. However, when the TR technology is applied to a new radio (new radio, NR) system, the reserved subcarriers affect transport block size (Transport block size, TBS) determining, resource mapping/demapping, and OFDM symbol generation/parsing by the receiving end/transmitting end. Therefore, how to apply the TR technology in the NR system becomes a problem that needs to be resolved urgently.

**SUMMARY**

Embodiments of this application provide a communication method and apparatus, to apply a TR technology in an NR system.

According to a first aspect, a communication method is provided. The method may be performed by a transmitting end or a chip, a chip system, or a circuit located in the transmitting end. The method may be implemented by using the following steps: determining a reserved carrier in a BWP based on a TR pattern and a first correspondence, where the TR pattern includes a set of subcarriers used as reserved carriers, and the first correspondence is a correspondence between an index that is of a subcarrier in the TR pattern and that is in the TR pattern and an index that is of the subcarrier in the TR pattern and that is based on a first common resource block CRB; and outputting a time domain signal based on the reserved carrier in the BWP.

An index of the TR pattern converts to start counting by using a 1st subcarrier of the first CRB as a start subcarrier. This helps align understanding of a quantity of reserved carriers and/or locations of the reserved carriers in the BWP at the transmitting end and a receiving end, and therefore helps reduce impact of the reserved carrier on NR system communication.

In a possible design, the first CRB is a start CRB of a carrier bandwidth; or the first CRB is a 1st CRB; or the first CRB is a start CRB of the BWP.

In a possible design, the index that is of the subcarrier in the TR pattern and that is based on the first CRB is determined based on the index that is of the subcarrier in the TR pattern and that is in the TR pattern, a value obtained by subtracting an index of the first CRB from an index of a second CRB, and a quantity of subcarriers included in one CRB, a location of a 1st subcarrier of the second CRB is the same as a location of a subcarrier A, and the subcarrier A is a subcarrier whose index is 0 or 1 in a counting manner of the TR pattern.

In a possible design, the index that is of the subcarrier in the TR pattern and that is in the TR pattern counts from 0, and an index $f_i^{CRB}$ that is of an $i$th subcarrier $f_i$ in the TR pattern and that is based on the first CRB satisfies the following formula, where $f_i$ is an index of the subcarrier in the TR pattern, and $i$ is an integer greater than 0:

$$f_i^{CRB} = f_i + a*b,$$

where

a is the value obtained by subtracting the index of the first CRB from the index of the second CRB, and b is the quantity of subcarriers included in one CRB.

In a possible design, the index that is of the subcarrier in the TR pattern and that is in the TR pattern counts from 1, and an index $f_i^{CRB}$ that is of an $i^{th}$ subcarrier $f_i$ in the TR pattern and that is based on the first CRB satisfies the following formula, where $f_i$ is an index of the subcarrier in the TR pattern, and $i$ is an integer greater than 0:

$$f_i^{CRB}=f_i+\text{a*b}-1,$$

where

a is the value obtained by subtracting the index of the first CRB from the index of the second CRB, and b is the quantity of subcarriers included in one CRB.

In a possible design, the second CRB is the start CRB of the carrier bandwidth; or the second CRB is a CRB 0; or the second CRB is the start CRB of the BWP.

In a possible design, the determining a reserved carrier in a bandwidth part BWP based on a tone reservation TR pattern and a first correspondence includes: determining, based on the first correspondence, an index that is of each subcarrier in the TR pattern and that is based on the first CRB; determining an index that is of a subcarrier in the BWP and that is based on the first CRB; and determining the reserved carrier in the BWP based on the index that is of each subcarrier in the TR pattern and that is based on the first CRB and the index that is of the subcarrier in the BWP and that is based on the first CRB.

In a possible design, before the outputting a time domain signal based on the reserved carrier in the BWP, the method further includes: determining a size of a transport block, where the transport block does not include an RE corresponding to the reserved carrier in the BWP.

In the foregoing manner, the reserved carrier is removed when the TBS is determined, so that a PAPR suppression solution can be adapted.

In a possible design, before the outputting a time domain signal based on the reserved carrier in the BWP, the method further includes: mapping physical channel information to at least one RE, where the at least one RE satisfies the following condition: the at least one RE does not overlap the RE corresponding to the reserved carrier in the BWP.

In the foregoing manner, the reserved carrier is removed during resource mapping, so that the PAPR suppression solution can be adapted.

In a possible design, before the outputting a time domain signal based on the reserved carrier in the BWP, the method further includes: performing DFT/IDFT modulation on a subcarrier, other than the reserved carrier in the BWP, that is included in a carrier bandwidth in which the BWP is located, to obtain the time domain signal.

In the foregoing manner, the reserved carrier is removed when a time domain OFDM/DFT-S-OFDM symbol is generated, so that the PAPR suppression solution can be adapted.

According to a second aspect, a communication method is provided. The method may be performed by a receiving end or a chip, a chip system, or a circuit located in the receiving end. The method may be implemented by using the following steps: receiving a time domain signal; determining a reserved carrier in a BWP based on first information or second information, where the first information is from a transmitting end and indicates the reserved carrier in the BWP, the second information includes a TR pattern and a first correspondence, the TR pattern includes a set of subcarriers used as reserved carriers, and the first correspondence is a correspondence between an index that is of a subcarrier in the TR pattern and that is in the TR pattern and an index that is of the subcarrier in the TR pattern and that is based on a first common resource block CRB; and parsing the time domain signal based on the reserved carrier in the BWP.

An index of the TR pattern converts to start counting by using a $1^{st}$ subcarrier of the first CRB as a start subcarrier. This helps align understanding of a quantity of reserved carriers and/or locations of the reserved carriers in the BWP at the transmitting end and the receiving end, and therefore helps reduce impact of the reserved carrier on NR system communication.

In a possible design, the first CRB is a start CRB of a carrier bandwidth; or the first CRB is a $1^{st}$ CRB; or the first CRB is a start CRB of the BWP.

In a possible design, the index that is of the subcarrier in the TR pattern and that is based on the first CRB is determined based on the index that is of the subcarrier in the TR pattern and that is in the TR pattern, a value obtained by subtracting an index of the first CRB from an index of a second CRB, and a quantity of subcarriers included in one CRB, a location of a $1^{st}$ subcarrier of the second CRB is the same as a location of a subcarrier A, and the subcarrier A is a subcarrier whose index is 0 or 1 in a counting manner of the TR pattern.

In a possible design, the index that is of the subcarrier in the TR pattern and that is in the TR pattern counts from 0, and an index $f_i^{CRB}$ that is of an $i^{th}$ subcarrier $f_i$ in the TR pattern and that is based on the first CRB satisfies the following

formula, where $f_i$ is an index of the subcarrier in the TR pattern, and $i$ is an integer greater than 0:

$$f_i^{CRB} = f_i + a*b,$$

where

a is the value obtained by subtracting the index of the first CRB from the index of the second CRB, and b is the quantity of subcarriers included in one CRB.

In a possible design, the index that is of the subcarrier in the TR pattern and that is in the TR pattern counts from 1, and an index $f_i^{CRB}$ that is of an $i^{th}$ subcarrier $f_i$ in the TR pattern and that is based on the first CRB satisfies the following formula, where $f_i$ is an index of the subcarrier in the TR pattern, and i is an integer greater than 0:

$$f_i^{CRB} = f_i + a*b - 1,$$

where

a is the value obtained by subtracting the index of the first CRB from the index of the second CRB, and b is the quantity of subcarriers included in one CRB.

In a possible design, the second CRB is the start CRB of the carrier bandwidth; or the second CRB is a CRB 0; or the second CRB is the start CRB of the BWP.

In a possible design, the determining a reserved carrier in a bandwidth part BWP based on second information includes: determining, based on the first correspondence, an index that is of each subcarrier in the TR pattern and that is based on the first CRB; and determining the reserved carrier in the BWP based on the index that is of each subcarrier in the TR pattern and that is based on the first CRB and an index that is of a subcarrier included in the BWP and that is based on the first CRB.

In a possible design, the parsing the time domain signal based on the reserved carrier in the BWP includes: parsing the time domain signal based on a subcarrier, other than the reserved carrier in the BWP, that is included in a carrier bandwidth in which the BWP is located.

In the foregoing manner, the reserved carrier is removed when a TBS is determined, so that a PAPR suppression solution can be adapted.

In a possible design, after the parsing the time domain signal based on the reserved carrier in the BWP, the method further includes: performing resource demapping on at least one resource element RE based on the reserved carrier in the BWP, where the at least one RE satisfies the following condition: the at least one RE does not overlap an RE corresponding to the reserved carrier in the BWP.

In the foregoing manner, the reserved carrier is removed during resource mapping, so that the PAPR suppression solution can be adapted.

In a possible design, after the parsing the time domain signal based on the reserved carrier in the BWP, the method further includes: determining a size of a transport block based on the reserved carrier in the BWP, where the transport block does not include the resource element RE corresponding to the reserved carrier in the BWP; and performing channel decoding based on the transport block size.

In the foregoing manner, the reserved carrier is removed when a time domain OFDM/DFT-S-OFDM symbol is generated, so that the PAPR suppression solution can be adapted.

According to a third aspect, this application further provides a communication apparatus. The apparatus is a transmitter-side device or a chip in the transmitter-side device. The communication apparatus has a function of implementing any method provided in the first aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing a corresponding function of the transmitter-side device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a receiver-side device, for example, data or signal receiving and sending. For example, a communication interface may be a transceiver, a circuit, a bus, a module, or a communication interface of another type.

In a possible design, the communication apparatus includes corresponding functional modules respectively configured to implement the steps in the foregoing method. The function may be implemented by hardware, or may be implemented by hardware executing corresponding software. The hardware or software includes one or more modules corresponding to the foregoing functions.

In a possible design, a structure of the communication apparatus includes a processing unit (or a processing unit) and a communication unit (or a communication unit). These units may perform corresponding functions in the foregoing method example. For details, refer to descriptions in the method provided in the first aspect. Details are not described herein again.

According to a fourth aspect, this application further provides a communication apparatus. The apparatus is a receiver-side device or a chip in the receiver-side device. The communication apparatus has a function of implementing any method provided in the second aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing a corresponding function of the receiver-side device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a transmitter-side device, for example, data or signal receiving and sending. For example, a communication interface may be a transceiver, a circuit, a bus, a module, or a communication interface of another type.

In a possible design, the communication apparatus includes corresponding functional modules respectively configured to implement the steps in the foregoing method. The function may be implemented by hardware, or may be implemented by hardware executing corresponding software. The hardware or software includes one or more modules corresponding to the foregoing functions.

In a possible design, a structure of the communication apparatus includes a processing unit (or a processing unit) and a communication unit (or a communication unit). These units may perform corresponding functions in the foregoing method example. For details, refer to descriptions in the method provided in the second aspect. Details are not described herein again.

According to a fifth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the first aspect and the possible designs through a logic circuit or by executing code instructions.

According to a sixth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the second aspect and the possible designs through a logic circuit or by executing code instructions.

According to a seventh aspect, a computer-readable storage medium is provided. The computer-readable storage medium stores a computer program or instructions. When the computer program or the instructions are executed by a processor, the method in any one of the first aspect or the second aspect and the possible designs is implemented.

According to an eighth aspect, a computer program product storing instructions is provided. When the instructions are run by a processor, the method in any one of the first aspect or the second aspect and the possible designs is implemented.

According to a ninth aspect, a chip system is provided. The chip system includes a processor, may further include a memory, and is configured to implement the method in any one of the first aspect or the second aspect and the possible designs. The chip system may include a chip, or may include a chip and another discrete component.

According to a tenth aspect, a communication system is provided. The system includes the apparatus (for example, a transmitter-side device) according to the first aspect and the apparatus (for example, a receiver-side device) according to the second aspect.

For technical effects that can be achieved by the technical solution in any one of the third aspect to the tenth aspect, refer to descriptions of technical effects that can be achieved by the technical solution in the first aspect. No repeated description is provided.

**BRIEF DESCRIPTION OF DRAWINGS**

FIG. 1 is a diagram of a transmitting end procedure to which an embodiment of this application is applicable;
FIG. 2 is a diagram of an architecture of a communication system to which an embodiment of this application is applicable;

FIG. 3 is a diagram of an architecture of another communication system to which an embodiment of this application is applicable;

FIG. 4 is a diagram of an architecture of still another communication system to which an embodiment of this application is applicable;

FIG. 5 is a schematic flowchart of a communication method to which an embodiment of this application is applicable;

FIG. 6 is a diagram of a reserved carrier in a BWP to which an embodiment of this application is applicable;

FIG. 7 is a diagram of a reserved carrier in another BWP to which an embodiment of this application is applicable;

FIG. 8 is a diagram of a reserved carrier in another BWP to which an embodiment of this application is applicable;

FIG. 9 is a diagram of an architecture of a communication apparatus to which an embodiment of this application is applicable; and

FIG. 10 is a diagram of an architecture of another communication apparatus to which an embodiment of this application is applicable.

## DESCRIPTION OF EMBODIMENTS

To make objectives, technical solutions, and advantages of embodiments of this application clearer, the following further describes embodiments of this application in detail with reference to the accompanying drawings.

The following explains and describes some terms in embodiments of this application, to facilitate understanding of a person skilled in the art.

(1) Resource element (resource element, RE): The resource element is a smallest resource unit in a physical resource, and occupies one OFDM symbol in time domain and one subcarrier in frequency domain.

(2) Resource block (resource block, RB): The RB includes 12 subcarriers in frequency domain. The RB is divided into a physical resource block (physical resource block, PRB) and a virtual resource block (virtual resource block, VRB). A media access control (media access control, MAC) layer allocates resources based on the VRB, and then maps the VRB to the PRB. The VRB is mapped to the PRB in two manners: a distributed manner and a centralized manner. During centralized mapping, the VRB is in one-to-one correspondence with the PRB. During distributed mapping, interleaving needs to be performed first, and then the VRB is mapped to the actual PRB according to a specific rule. The physical resource block PRB may be used inside a BWP.

(3) Common resource block (common resource block, CRB): The CRB is an RB numbering manner defined starting from a point A, and belongs to a global resource block (global resource block). The point A is equivalent to a reference point in frequency domain. An index (or an index) of the CRB may count from 0, in other words, an index of a 1st CRB may be 0. For ease of description, the 1st CRB is referred to as a CRB 0 below. A center of a 1st subcarrier, namely, a subcarrier 0, in the CRB 0 coincides with the point A. An index of a CRB in which the RE is located is

$$n_{CRB}^{\mu} = \left\lfloor \frac{k}{N_{sc}^{RB}} \right\rfloor$$

, where k is an index of the RE relative to the point A. For example, k=0 indicates that a center point of the RE is in a subcarrier of the point A. $N_{sc}^{RB}$ indicates a quantity of subcarriers included in each CRB. For example, $N_{sc}^{RB}=12$. $\mu$ is related to a subcarrier spacing. To be specific, the subcarrier spacing is $2^{\mu} \cdot 15$ kHz.

(4) Bandwidth part (bandwidth part, BWP): The BWP is a subset of contiguous CRBs, and facilitates configuration of different bandwidths for UE with different service requirements.

A relationship between a PRB index $n_{PRB}^{\mu}$ of a BWP i and a CRB index $n_{CRB}^{\mu}$ of the BWP i is:

$$n_{CRB}^{\mu} = n_{PRB}^{\mu} + N_{BWP,i}^{start,\mu}.$$

$N_{BWP,i}^{start,\mu}$ is a start CRB index of the BWP i relative to the CRB 0. $N_{BWP,i}^{size,\mu}$ indicates a quantity of RBs (PRBs) in the BWP. $N_{BWP,i}^{start,\mu}$ and $N_{BWP,i}^{size,\mu}$ respectively satisfy $N_{grid,x}^{start,\mu} \leq N_{BWP,i}^{start,\mu} < N_{grid,x}^{start,\mu} + N_{grid,x}^{size,\mu}$ and $N_{grid,x}^{start,\mu} < N_{BWP,i}^{start,\mu} + N_{BWP,i}^{size,\mu} \leq N_{grid,x}^{start,\mu} + N_{grid,x}^{size,\mu}$. In other words, the RBs occupied by the BWP cannot exceed an RB range of a carrier bandwidth in which the BWP is located. $N_{grid,x}^{start,\mu}$ indicates a start CRB index that is of the carrier bandwidth in which the BWP is located and that is relative to the CRB 0, and $N_{grid,x}^{size,\mu}$ indicates a quantity of RBs (PRBs) in the carrier bandwidth in which the BWP is located. The carrier bandwidth (carrier bandwidth) may be sent to UE by using a broadcast message.

A base station indicates a start RB index $RB_{start}$ of the BWP and a BWP length $L_{RBs}$ by sending a resource indicator value (resource indicator value, RIV) to the UE. A locationAndBandwidth parameter sent by the base station to the UE includes the start RB index $RB_{start}$ of the BWP and the quantity $L_{RBs}$ of RBs occupied by the BWP. $RB_{start}$ may also be explained as a distance between a frequency domain start location of a BWP bandwidth and a start location of the carrier bandwidth. $N_{BWP,i}^{start,\mu}$ is determined by $RB_{start}$ and the start location of the carrier bandwidth (an offsetToCarrier parameter value), where offsetToCarrier determines a value of $N_{grid,x}^{start,\mu}$, that is, $N_{grid,x}^{start,\mu} = \text{offsetToCarrier}$. $N_{BWP,i}^{start,\mu}$ may be represented as $N_{BWP,i}^{start,\mu} = RB_{start} + N_{grid,x}^{start,\mu}$. The offsetToCarrier parameter value may be sent to the UE by using the broadcast message.

The technical solutions provided in embodiments of this application may be applied to a 5th generation (5th generation, 5G) mobile communication system, for example, a new radio (new radio, NR) system, may be applied to a long term evolution (Long term evolution, LTE) system or a non-terrestrial network (non-terrestrial network, NTN) system, or may be applied to a next-generation mobile communication system or another similar communication system. The technical solutions provided in embodiments of this application may also be applied to a vehicle to everything (vehicle to everything, V2X) system, an internet of things (internet of things, IoT) system, a narrowband internet of things (narrowband internet of things, NB-IoT) system, and the like, for example, a wireless fidelity (wireless fidelity, Wi-Fi)-based IoT network or a wearable Wi-Fi network.

This application may be applied to OFDM and discrete fourier transform (discrete fourier transform, DFT)-s-OFDM waveform technologies. Certainly, this application may also be applied to another waveform technology with a high PARP. Details are not described herein. In this application, an OFDM/DFT-s-OFDM waveform is used as an example for description.

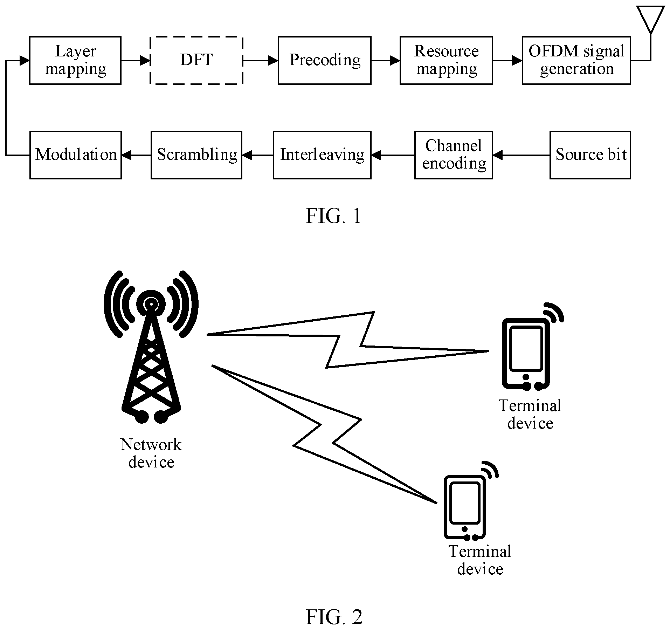

For example, FIG. 1 is a block diagram of a transmitting end procedure in an OFDM/DFT-s-OFDM system. After a source information bit is sequentially processed by a channel encoding module, an interleaving module, a scrambling module, a modulation module, a layer mapping module, a DFT module, a precoding module, and a resource mapping module, OFDM signal generation is finally performed on the source information bit. In other words, a signal is transformed to time domain through inverse discrete fourier transform (inverse discrete fourier transform, IDFT). DFT may be an optional process.

It should be noted that other modules, for example, a cyclic prefix (cyclic prefix, CP) addition module, a digital-to-analog converter (digital-to-analog converter, DAC), and a high power amplifier (high power amplifier, HPA), are omitted in FIG. 1.

The signal reaches a receiving end through the ground or an NTN channel. Correspondingly, after the receiving end samples a received continuous-time signal, obtains a discrete-time signal by using an analog-to-digital converter (analog-to-digital converter, ADC), then performs DFT processing on the signal, where the DFT processing is equivalent to corresponding inverse processing performed by a transmitting end, and performs frequency domain equalization, subsequent decoding is performed on data.

In an example, FIG. 2 is a diagram of a network architecture of a communication system to which an embodiment of this application is applicable. The communication system may include a network device and two terminal devices. The two terminal devices may be mobile terminal devices and/or any other suitable devices used for communication in a wireless communication system, and may be both connected to the network device. Both the two terminal devices can communicate with the network device. Certainly, a quantity of terminal devices in FIG. 2 is merely an example, and may be less or more. In addition, the terminal device in FIG. 2 is also an example. For example, the terminal device may alternatively be an internet of things device like a smart water meter.

In embodiments of this application, the terminal device is a device having a wireless transceiver function, and may send a signal to the network device, or receive a signal from the network device. The terminal device may include user equipment (user equipment, UE), and is sometimes referred to as a terminal, an access station, a UE station, a remote station, a wireless communication device, a user apparatus, or the like. The terminal device is configured to connect a person, an object, a machine, and the like, may be widely used in various scenarios, and includes, for example, but not limited to terminal devices in the following scenarios: cellular communication, device to device (device to device, D2D), V2X, machine to machine/machine type communication (machine to machine/machine type communication, M2M/MTC), IoT, virtual reality (virtual reality, VR), augmented reality (augmented reality, AR), industrial control (industrial control), self driving (self driving), remote medical (remote medical), a smart grid (smart grid), smart furniture, smart office, smart wearable, smart transportation, a smart city (smart city), an uncrewed aerial vehicle, a robot, and the like.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. If the various terminal devices described above are located in a vehicle (for example, placed in the vehicle or mounted in the vehicle), the terminal devices may be all considered as vehicle-mounted terminal devices. For example, the vehicle-mounted terminal device is also referred to as an on-board unit (on-board unit, OBU). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle uses the vehicle-mounted module, the vehicle-mounted assembly, the vehicle-mounted component, the vehicle-mounted chip, or the vehicle-mounted unit that is built in the vehicle, to implement a method in this application.

In embodiments of this application, a communication apparatus configured to implement a function of the terminal device may be the terminal device, or may be an apparatus, for example, a chip system, that can support the terminal device in implementing the function. The apparatus may be installed in the terminal device. In the technical solutions provided in embodiments of this application, the technical solutions provided in embodiments of this application are described by using an example in which the apparatus configured to implement the function of the terminal device is the terminal device.

In embodiments of this application, the network device may be an access device through which the terminal device accesses a mobile communication system in a wireless manner, for example, includes an access network (access network, AN) device, for example, a base station. The network device may alternatively be a device that communicates with the terminal device over an air interface. The network device may include an evolved NodeB (evolved NodeB) (also referred to as an eNB or an e-NodeB for short) in an LTE system or a long term evolution-advanced (long term evolution-advanced, LTE-A) system. The network device may alternatively include a next generation NodeB (next generation NodeB, gNB) in a 5G NR system. The network device may alternatively include an access node or the like in a wireless fidelity (wireless fidelity, Wi-Fi) system. The network device may alternatively be a station (station), a relay station, a vehicle-mounted device, a future evolved public land mobile network (Public Land Mobile Network, PLMN) device, a device in a D2D network, a device in a machine to machine (machine to machine, M2M) network, a device in an internet of things IoT network, a network device in a PLMN network, or the like. A specific technology and a specific device form that are used by the network device are not limited in embodiments of this application.

In addition, the base station in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that such protocol layer division is merely an example, and division may be performed at another protocol layer. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plan, CP) and a user plane (user plan, UP) of the CU may be separated into different entities for implementation, where the entities are respectively a control-plane CU entity (CU-CP entity) and a user-plane CU entity (CU-UP entity). The control plane CU-CP of the CU further includes a further division architecture. In other words, an existing CU-CP is further divided into a CU-CP 1 and a CU-CP 2. The CU-CP1 includes various radio resource management functions, and the CU-CP2 includes only the RRC function and the PDCP-C function (namely, a basic function of control plane signaling at a PDCP layer). In the network architecture, signaling generated by the CU may be sent to the terminal device through the DU, or signaling generated by UE may be sent to the CU through the DU. The DU may directly transparently transmit the signaling to the UE or the CU through protocol layer encapsulation without parsing the signaling. In this network architecture, the CU is classified as a network device on a radio access network (radio access network, RAN) side. In addition, the CU may alternatively be classified as a network device on a core network (core network, CN) side. This is not limited in this application.

In embodiments of this application, a communication apparatus configured to implement a function of the network device may be the network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used to describe the technical solutions provided in embodiments of this application.

EP 4 546 690 A1

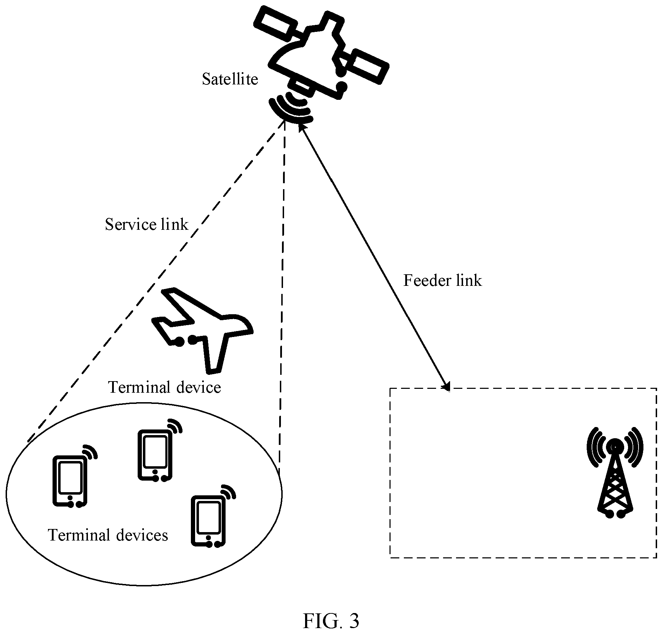

In another example, FIG. 3 is a diagram of a network architecture of another communication system to which an embodiment of this application is applicable. The communication system includes a satellite, terminal devices, and a gateway. The satellite may be a highly elliptical orbit (highly elliptical orbiting, HEO) satellite, a geostationary earth orbit satellite (geosynchronous earth orbit, GEO) satellite, a medium earth orbit (medium earth orbit, MEO) satellite, or a low-earth orbit (low-earth orbit, LEO) satellite. In addition, an NTN system may further include a high-altitude platform (high-altitude platform station, HAPS) and the like. This is not limited herein. The gateway (gateway) (or referred to as a terrestrial station, an earth station, a signal gateway station, or a gateway station) may be used to connect the satellite and a terrestrial base station gateway station/signal gateway station (gateway). One or more satellites may be connected to one or more terrestrial base stations via one or more gateways. This is not limited herein. The terminal devices include, for example, mobile phones and an airplane (which are used as an example in FIG. 3). A link between the satellite and the terminal device is referred to as a service link (service link), and a link between the satellite and the gateway is referred to as a feeder link (feeder link).

An operating mode of the satellite is not limited in this embodiment of this application. For example, the operating mode of the satellite may be a transparent (transparent) transmission mode, or a regenerative (regenerative) mode.

In the transparent transmission mode, the satellite, as an analog radio frequency repeater, has a relay forwarding function, can implement radio frequency conversion and amplification, and can transparently transmit or copy a signal between the base station and the terminal device. For example, a signal sent by the terminal device may be transparently transmitted via the satellite and forwarded by the gateway to the terrestrial base station. The gateway has some or all functions of the base station. In this case, the gateway may be considered as a base station. It may be considered that a network element and the base station may be deployed together or separately. If the gateway and the base station are separately deployed, a delay of the feeder link includes a delay from the satellite to the gateway and a delay from the gateway to the base station.

In the regenerative mode, the satellite, as a base station for wireless communication, has some or all functions of the base station, implements regeneration of signals received from the ground, and may understand and process these signals. For example, the satellite may be a base station carried on an artificial earth satellite or a high-altitude aircraft. For example, the base station may be an evolved NodeB (eNB) or a 5G base station (gNB). The gateway may forward signaling between the satellite (namely, the base station) and a core network.

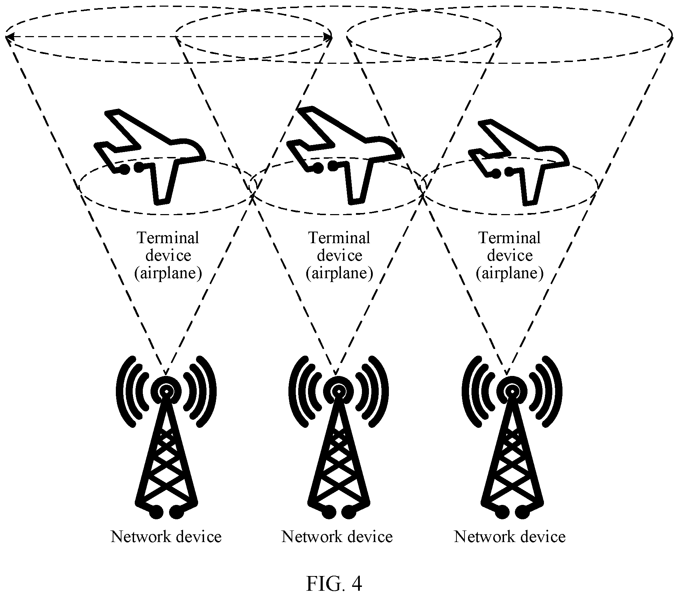

It may be understood that embodiments of this application may also be applicable to an air to ground (air to ground, ATG) communication system. For example, FIG. 4 is a diagram of a network architecture of still another communication system to which an embodiment of this application is applicable. The communication system includes at least one network device and at least one high-altitude terminal device, for example, a high-altitude airplane and an on-board terminal device.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

In embodiments of this application, unless otherwise specified, a quantity of nouns indicates "a singular noun or a plural noun", namely, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

Unless otherwise stated, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, first information and second information are merely used to distinguish between different information, and do not indicate different lengths, priorities, importance, or the like of the two pieces of information.

In this embodiment of this application, an index of a subcarrier may also be referred to as a sequence number, an index number, or the like.

The foregoing describes the communication systems to which embodiments of this application are applicable. The following describes related technical content mainly related to embodiments of this application.

A satellite data processing capability and transmit power of a satellite device are limited due to manufacturing and transmission costs. Specifically, the satellite device is an energy- and power-limited device, and is sensitive to satellite power efficiency, that is, power efficiency of the satellite device is expected to be improved as much as possible. In both terrestrial cellular network communication and NTN communication, it is required that a high power amplifier (high power amplifier, HPA) at a transmitting end operate near a linear saturation region, to improve power efficiency of the HPA.

If a system performs data transmission through an orthogonal frequency division multiplexing (orthogonal frequency division multiplexing, OFDM) waveform or a waveform with a high PAPR characteristic, a high PAPR occurs. Because a PAPR of an OFDM signal is high, when the HPA operates near a saturation point, there is a specific probability that the signal that is input to the HPA enters a non-linear region, and therefore non-linear distortion occurs. Non-linear distortion introduces in-band distortion and out-of-band radiation, which affects decoding accuracy of a receiving end and causes interference to a user on an adjacent channel. Therefore, power back-off can be performed on the signal that is input to the HPA, to minimize non-linear distortion of the HPA. Performing power back-off on the signal that is input to the HPA may be understood as reducing power of the signal that is input to the HPA. Although power back-off performed on the signal that is input to the HPA may reduce non-linear distortion of the HPA, power of a signal output by the HPA is reduced. This reduces transmit power and power efficiency of the HPA, and further reduces signal receiving power of the receiving end and reduces a signal-to-noise ratio of the receiving end. Therefore, a TR technology is proposed to suppress the PAPR corresponding to the OFDM waveform. The TR technology may be understood as that some reserved carriers are reserved as carriers for PAPR suppression. The reserved carriers for the PAPR suppression may include a plurality of subcarriers, which are also referred to as a carrier set. A pattern (pattern) formed by subcarrier numbers corresponding to the subcarriers included in the carrier set is referred to as a TR pattern. That is, a TR pattern may indicate a set of reserved carriers for the PAPR suppression.

It may be understood that, the reserved carriers for the PAPR suppression are reserved at the transmitting end to carry a signal for the PAPR suppression, and some carriers except the reserved carriers are used to carry a data signal. Certainly, to improve spectral efficiency, a data signal may also be carried on the reserved carrier, that is, the reserved carrier may carry both the signal for the PAPR suppression and the data signal. Optionally, the carrier set carrying the signal for the PAPR suppression does not overlap a carrier set carrying the data signal (this is used as an example in this specification). When demodulating information received from the transmitting end, the receiving end may skip or remove the reserved carriers for the PAPR suppression, that is, not decode the signals on the reserved carriers for the PAPR suppression. A principle of the PAPR suppression based on the TR pattern is the conventional technology, and details are not described herein.

When the TR technology is applied to an NR system, the reserved subcarriers affect TBS determining, resource mapping/demapping, and OFDM symbol generation/parsing by the receiving end/transmitting end. Therefore, how to apply the TR technology in the NR system becomes a problem that needs to be resolved urgently.

Based on this, embodiments of this application provide a communication method and apparatus, to implement application of the TR technology in the NR system. The method and the apparatus are based on a same concept. The method and the apparatus have a similar problem-resolving principle. Therefore, for implementations of the apparatus and the method, refer to each other. No repeated description is provided.

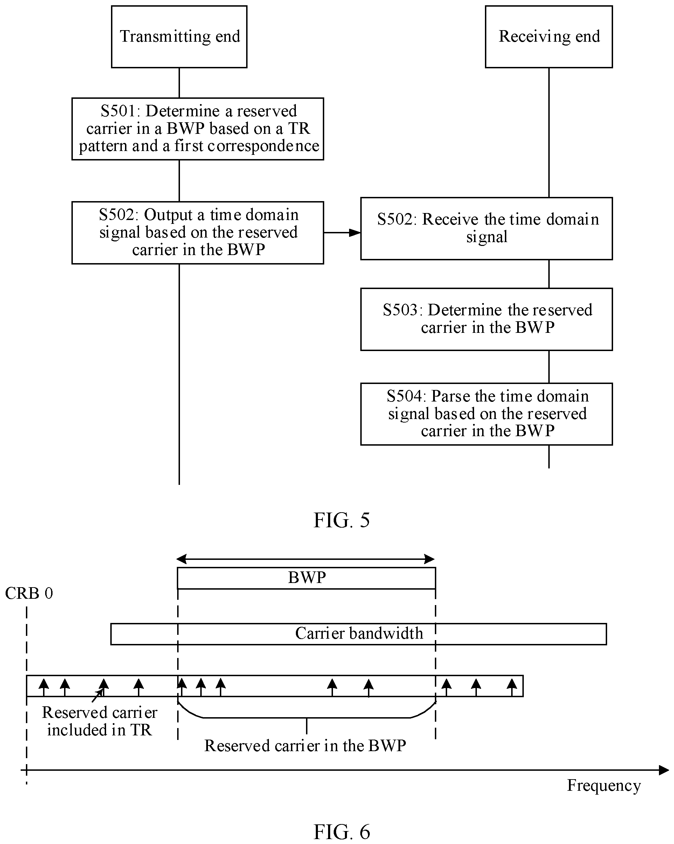

FIG. 5 is a schematic flowchart of a communication method according to this application. In this application, a transmitting end may be a network device, and a receiving end may be a terminal device. Alternatively, the transmitting end may be a terminal device, and the receiving end is a network device. Alternatively, both the transmitting end and the receiving end may be terminal devices. The method includes the following steps.

S501: The transmitting end determines a reserved carrier in a BWP based on a TR pattern and a first correspondence.

The TR pattern includes a set of subcarriers used as reserved carriers. For example, the TR pattern includes a set **R,** where **R**={3 42 63 66 95 117 134 198 254 259 265 269 363 367 379 386 405 421 431 478 527 550 557 574 605 626 635 641 645 685 703 707 715 717 729 766 791 946 1007 1057 1181 1190 1326 1354 1355 1366 1441 1462 1489 1534 1559 1563 1579 1667 1681 1711 1862 1895 1934 1939 1981 1997 2005 2055 2135 2209 2251 2263 2266 2357 2367 2382 2419 2442 2457 2526 2539 2629 2734 2799 2822 2845 2867 2937 2966 2987 3043 3049 3074 3077 3083 3098 3099 3117 3118 3125}. A number in the set **R** indicates a subcarrier index, and the subcarrier index may count from 0, or may count from 1. For ease of description, the following uses an example in which the subcarrier index counts from 0 for description.

The first correspondence is a correspondence between an index that is of a subcarrier in the TR pattern and that is in the TR pattern and an index that is of the subcarrier in the TR pattern and that is based on a first CRB. It may also be understood that the first correspondence indicates an index corresponding to each subcarrier in the TR pattern when counting starts from an index of a 1st subcarrier of the first CRB after a start subcarrier for index counting of each subcarrier in the TR pattern is aligned with a 1st subcarrier of a second CRB.

If the index that is of the subcarrier in the TR pattern and that is in the TR pattern counts from 0, the start subcarrier for the index counting of each subcarrier in the TR pattern is a subcarrier whose index number is 0. If the index that is of the subcarrier in the TR pattern and that is in the TR pattern counts from 1, the start subcarrier for the index counting of each subcarrier in the TR pattern is a subcarrier whose index number is 1. For ease of description, the start subcarrier is referred to as a subcarrier A below.

For example, the index that is of the subcarrier in the TR pattern and that is based on the first CRB may be determined based on the index that is of the subcarrier in the TR pattern and that is in the TR pattern, a value obtained by subtracting an index of the first CRB from an index of the second CRB, and a quantity of subcarriers included in one CRB.

For example, the second CRB may be a CRB 0. In other words, the subcarrier A is aligned with a 1st subcarrier of the CRB 0. The reserved carrier in the BWP may be shown in FIG. 6.

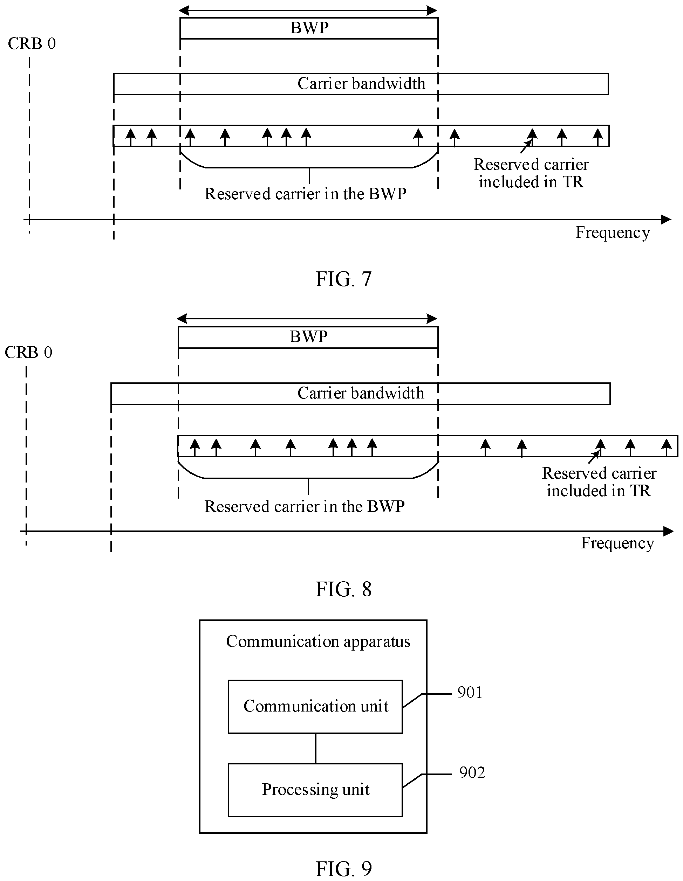

The second CRB may alternatively be a start CRB of a carrier bandwidth. In this example, the subcarrier A is aligned with a 1st subcarrier of the start CRB of the carrier bandwidth. The reserved carrier in the BWP may be shown in FIG. 7.

The second CRB may alternatively be a start CRB of the BWP. In this example, the subcarrier A is aligned with a 1st subcarrier of the start CRB of the BWP. The reserved carrier in the BWP may be shown in FIG. 8.

For example, the first CRB may be a CRB 0. In other words, counting starts from a 1st subcarrier of the CRB 0, to determine the index of the subcarrier in the TR pattern.

Alternatively, the first CRB may be a start CRB of a carrier bandwidth. In other words, counting starts from a 1st subcarrier of the start CRB of the carrier bandwidth, to determine the index of the subcarrier in the TR pattern.

Alternatively, the first CRB may be a start CRB of the BWP. In other words, counting starts from a 1st subcarrier of the start CRB of the BWP, to determine the index of the subcarrier in the TR pattern.

If the index that is of the subcarrier in the TR pattern and that is in the TR pattern counts from 0, namely, A= 0, an index $f_i^{\text{first } CRB}$ that is of an $i^{\text{th}}$ subcarrier $f_i$ in the TR pattern and that is based on the first CRB satisfies Formula (1), or the index $f_i^{\text{first } CRB}$ of the subcarrier $f_i$ based on the first CRB may be determined by using Formula (1), where $f_i$ is an index of the subcarrier in the TR pattern, and i is an integer greater than 0. For example, an index of a 1st subcarrier (namely, i=1) in the TR pattern is 3, namely, $f_1 = 3$. For another example, an index of a 3rd subcarrier (namely, i=3) is $f_3 = 63$.

$$f_i^{\text{first } CRB}=f_i+a*b \qquad (1)$$

a is the value obtained by subtracting the index of the first CRB from the index of the second CRB, and b is the quantity of subcarriers included in one CRB. A location of the 1st subcarrier of the second CRB is the same as a location of the subcarrier A.

For example, one RB includes 12 subcarriers. There are two CRBs between the first CRB and the second CRB. In this case, a=2. A quantity of resource blocks RBs between the 1st subcarrier of the first CRB and the 1st subcarrier of the second CRB is a*b=2*12=24.

If the index of the subcarrier in the TR pattern counts from 1, the index $f_i^{\text{first } CRB}$ of the subcarrier $f_i$ based on the first CRB satisfies Formula (2), or the index $f_i^{\text{first } CRB}$ of the subcarrier $f_i$ based on the first CRB may be determined by using Formula (2):

$$f_i^{\text{first } CRB}=f_i+a*b-1 \qquad (2)$$

a is a value obtained by subtracting the index of the second CRB from the index of the first CRB, and b is the quantity of subcarriers included in one CRB.

Optionally, the first correspondence may be defined in a protocol.

The following describes Formula (1) and Formula (2) with reference to examples of the first CRB and the second CRB.

Example 1: The first CRB may be the CRB 0. In this case, an index $f_i^{\text{first } CRB}$ of a subcarrier $f_i$ based on the first CRB may be represented as $f_i^{CRB}$.

The following describes Formula (1) and Formula (2) with reference to examples of the second CRB.

Example 1.1: The second CRB may be the CRB 0. Formula (1) may be replaced with $f_i^{CRB}=f_i$, and Formula (2) may be replaced with $f_i^{CRB}=f_i-1$.

Example 1.2: The second CRB may be the start CRB of the carrier bandwidth. In Formula (1) and Formula (2), if an index $N_{\text{grid},x}^{\text{start},\mu}$ of the start CRB of the carrier bandwidth counts from 0, $a=N_{\text{grid},x}^{\text{start},\mu}$; or if $N_{\text{grid},x}^{\text{start},\mu}$ counts from 1, $a=N_{\text{grid},x}^{\text{start},\mu}-1$.

Therefore, if $N_{grid,x}^{start,\mu}$ counts from 0, Formula (1) may be replaced with $f_i^{CRB}=f_i + N_{grid,x}^{start,\mu} * b$, and Formula (2) may be replaced with $f_i^{CRB}=f_i + N_{grid,x}^{start,\mu} * b - 1$.

If $N_{grid,x}^{start,\mu}$ counts from 1, Formula (1) may be replaced with $f_i^{CRB}=f_i + (N_{grid,x}^{start,\mu} - 1) * b$, and Formula (2) may be replaced with $f_i^{CRB}=f_i + (N_{grid,x}^{start,\mu} - 1) * b - 1$.

A value of the index $N_{grid,x}^{start,\mu}$ of the start resource block CRB of the carrier bandwidth is related to a start location offsetToCarrier of the carrier bandwidth, for example, $N_{grid,x}^{start,\mu} =$ offsetToCarrier. A start location offsetToCarrier parameter value of the carrier bandwidth may be sent by the network device to the terminal device by using a broadcast message. If the transmitting end is the network device, and the receiving end is the terminal device, the receiving end may obtain the offsetToCarrier parameter value by using the broadcast message. If the transmitting end is the terminal device, and the receiving end is the network device, the transmitting end may obtain the offsetToCarrier parameter value by using the broadcast message.

Example 1.3: The second CRB may be the start CRB of the BWP. An index $N_{BWP}^{start,\mu}$ of the start CRB of the BWP may be determined based on an index $RB_{start}$ of a start RB of the BWP and an offsetToCarrier value. $N_{BWP}^{start,\mu}$ may be represented as $N_{BWP}^{start,\mu} = RB_{start} + N_{grid,x}^{start,\mu}$.

Therefore, in Formula (1) and Formula (2), if an index $N_{grid,x}^{start,\mu}$ of the start CRB of the carrier bandwidth counts from 0, $a= N_{BWP}^{start,\mu}=RB_{start} + N_{grid,x}^{start,\mu}$. If the index $N_{grid,x}^{start,\mu}$ of the start CRB of the carrier bandwidth counts from 1, $a= N_{BWP}^{start,\mu} - 1=RB_{start} + N_{grid,x}^{start,\mu} - 1$.

Example 2: The first CRB may be the start CRB of the carrier bandwidth. In this case, an index $f_i^{first\ CRB}$ of a subcarrier $f_i$ based on the first CRB may be represented as $f_i^{carrier\ bandwidth}$.

The following describes Formula (1) and Formula (2) with reference to examples of the second CRB.

Example 2.1: The second CRB may be the CRB 0. If $N_{grid,x}^{start,\mu}$ counts from 0, Formula (1) may be replaced with $f_i^{carrier\ bandwidth}=f_i - N_{grid,x}^{start,\mu} * b$, and Formula (2) may be replaced with

$$f_i^{carrier\ bandwidth}=f_i - N_{grid,x}^{start,\mu} * b - 1.$$

Example 2.2: The second CRB may be the start CRB of the carrier bandwidth. In an example, if $N_{grid,x}^{start,\mu}$ counts from 0, Formula (1) may be replaced with $f_i^{carrier\ bandwidth} = f_i$, and Formula (2) may be replaced with $f_i^{carrier\ bandwidth} = f_i - 1$.

Example 2.3: The second CRB may be the start CRB of the BWP. In Formula (1) and Formula (2), $a= RB_{start}$. Formula (1) may be replaced with $f_i^{CRB}=f_i + RB_{start} * b$, and Formula (2) may be replaced with $f_i^{CRB}=f_i + RB_{start} * b - 1$.

Example 3: The first CRB may be the start CRB of the BWP. In this case, an index $f_i^{first\ CRB}$ of a subcarrier $f_i$ based on the first CRB may be represented as $f_i^{BWP}$.

Example 3.1: The second CRB may be the CRB 0. If $N_{grid,x}^{start,\mu}$ counts from 0, Formula (1) may be replaced with $f_i^{BWP} = f_i - (N_{grid,x}^{start,\mu} + RB_{start}) * b$, and Formula (2) may be replaced with

$$f_i^{BWP} = f_i - (N_{grid,x}^{start,\mu} + RB_{start}) * b - 1.$$

Example 3.2: The second CRB may be the start CRB of the carrier bandwidth. Formula (1) may be replaced with $f_i^{BWP} = f_i - RB_{start} * b$, and Formula (2) may be replaced with

$$f_i^{BWP} = f_i - RB_{start} * b - 1.$$

Example 3.3: The second CRB may be the start CRB of the BWP. Formula (1) may be replaced with $f_i^{BWP} = f_i$, and Formula (2) may be replaced with $f_i^{BWP} = f_i - 1$.

In a specific implementation, the transmitting end may determine the reserved carrier in the BWP by performing the following process.

A1: The transmitting end may determine, based on the first correspondence, an index that is of each subcarrier in the TR pattern and that is based on the first CRB.

Specifically, the transmitting end may determine, based on Formula (1) or Formula (2), the index that is of each subcarrier in the TR pattern and that is based on the first CRB.

A2: The transmitting end may determine, based on the index that is of each subcarrier in the TR pattern and that is based on the first CRB, an index that is of each subcarrier in the TR pattern and that is in the carrier bandwidth.

For example, if the first CRB is the CRB 0, an index $f_i^{carrier\ bandwidth}$ of the subcarrier $f_i$ in the carrier bandwidth may satisfy Formula (3), or may be determined by using Formula (3):

$$f_i^{carrier\ bandwidth} = f_i^{CRB} - N_{grid,x}^{start,\mu} * b \tag{3}$$

Specifically, the index $f_i^{carrier\ bandwidth}$ of the subcarrier $f_i$ in the carrier bandwidth in Examples 1.1 to 1.3 may be obtained by substituting Formula (1) or Formula (2) in Examples 1.1 to 1.3 into Formula (3).

If the first CRB is the start CRB of the carrier bandwidth, the index $f_i^{carrier\ bandwidth}$ of the subcarrier $f_i$ in the carrier bandwidth may directly use the formulas in Example 2. Details are not described herein again.

If the first CRB is the start CRB of the BWP, the index $f_i^{carrier\ bandwidth}$ of the subcarrier $f_i$ in the carrier bandwidth may satisfy Formula (4), or may be determined by using Formula (4):

$$f_i^{carrier\ bandwidth} = f_i^{BWP} + RB_{start} * b \tag{4}$$

Specifically, the index $f_i^{carrier\ bandwidth}$ of the subcarrier $f_i$ in the carrier bandwidth in Examples 3.1 to 3.3 may be obtained by substituting Formula (1) or Formula (2) in Examples 3.1 to 3.3 into Formula (4).

A3: The transmitting end may determine, based on an index $f_r^{BWP}$ that is of an $r^{th}$ subcarrier in the BWP and that is in the BWP, an index $f_r^{carrier\ bandwidth}$ that is of the subcarrier in the BWP and that is in the carrier bandwidth, where r is an integer greater than 0.

The index $f_r^{\text{carrier bandwidth}}$ that is of the subcarrier r in the BWP and that is in the carrier bandwidth may satisfy Formula (5), or may be determined based on Formula (5):

$$f_r^{\text{carrier bandwidth}} = f_r^{\text{BWP}} + RB_{\text{start}} * b \tag{5}$$

$f_r^{\text{carrier bandwidth}}$ is the index of the subcarrier r in the carrier bandwidth. Formula (5) is described by using an example in which the index of the subcarrier in the carrier bandwidth counts from 0.

A4: The transmitting end determines the reserved carrier in the BWP based on the index that is of each subcarrier in the TR pattern and that is in the carrier bandwidth and the index that is of the subcarrier in the BWP and that is in the carrier bandwidth.

Specifically, the transmitting end may compare the index that is of each subcarrier in the TR pattern and that is in the carrier bandwidth with the index that is of the subcarrier in the BWP and that is in the carrier bandwidth, where a subcarrier corresponding to a repeated index may be considered as the reserved carrier in the BWP.

In the foregoing implementation, the reserved carrier in the BWP may be determined by converting the index that is of the subcarrier in the BWP and that is in the BWP to the index that is of the subcarrier in the BWP and that is in the carrier bandwidth.

In another specific implementation, the transmitting end may determine the reserved carrier in the BWP by performing the following process.

B1: The transmitting end may determine, based on the first correspondence, an index that is of each subcarrier in the TR pattern and that is based on the first CRB.

Specifically, the transmitting end may determine, based on Formula (1) or Formula (2), the index that is of each subcarrier in the TR pattern and that is based on the first CRB.

B2: The transmitting end determines, based on the index that is of each subcarrier in the TR pattern and that is based on the first CRB, an index that is of each subcarrier in the TR pattern and that is in the BWP.

For example, if the first CRB is the CRB 0, an index $f_i^{\text{BWP}}$ of the subcarrier $f_i$ in the BWP may satisfy Formula (6), or may be determined by using Formula (6):

$$f_i^{\text{BWP}} = f_i^{CRB} - (N_{\text{grid,x}}^{\text{start},\mu} + RB_{start}) * b \tag{6}$$

Specifically, the index $f_i^{\text{BWP}}$ of the subcarrier $f_i$ in the BWP in Examples 1.1 to 1.3 may be obtained by substituting Formula (1) or Formula (2) in Examples 1.1 to 1.3 into Formula (6). Formula (6) is described by using an example in which the index $N_{\text{grid,x}}^{\text{start},\mu}$ of the subcarrier in the carrier bandwidth counts from 0.

If the first CRB is the start CRB of the carrier bandwidth, the index $f_i^{\text{BWP}}$ of the subcarrier $f_i$ in the BWP may satisfy Formula (7), or may be determined by using Formula (7):

$$f_i^{\text{BWP}} = f_i^{\text{carrier bandwidth}} - RB_{\text{start}} * b \tag{7}$$

Specifically, the index $f_i^{\text{BWP}}$ of the subcarrier $f_i$ in the BWP in Examples 2.1 to 2.3 may be obtained by substituting Formula (1) or Formula (2) in Examples 2.1 to 2.3 into Formula (7).

If the first CRB is the start CRB of the BWP, the index $f_i^{\text{BWP}}$ of the subcarrier $f_i$ in the BWP may directly use the formulas in Example 3. Details are not described herein again.

B3: The transmitting end determines the reserved carrier in the BWP based on the index that is of each subcarrier in the TR pattern and that is in the BWP and the index that is of the subcarrier in the BWP and that is in the BWP.

Specifically, the transmitting end may compare the index that is of each subcarrier in the TR pattern and that is in the BWP with the index that is of the subcarrier in the BWP and that is in the BWP, where a subcarrier corresponding to a repeated index may be considered as the reserved carrier in the BWP.

In the foregoing implementation, the reserved carrier in the BWP may be determined by converting the index that is of the subcarrier in the TR pattern and that is based on the first CRB to the index that is of the subcarrier in the TR pattern and that is in the BWP.

In a specific implementation, the transmitting end may determine the reserved carrier in the BWP by performing the following process.

C1: The transmitting end may determine, based on the first correspondence, an index that is of each subcarrier in the TR pattern and that is based on the first CRB.

Specifically, the transmitting end may determine, based on Formula (1) or Formula (2), the index that is of each subcarrier in the TR pattern and that is based on the first CRB.

C2: The transmitting end may determine, based on the index that is of each subcarrier in the TR pattern and that is based on the first CRB, an index that is of each subcarrier in the TR pattern and that is based on the CRB 0.

If the first CRB is the CRB 0, an index $f_i^{CRB}$ of the subcarrier $f_i$ based on the CRB 0 may directly use the formulas in Example 1. Details are not described herein again.

For example, if the first CRB is the start CRB of the carrier bandwidth, the index $f_i^{CRB}$ of the subcarrier $f_i$ based on the CRB 0 may satisfy Formula (8), or may be determined by using Formula (8):

$$f_i^{CRB} = f_i^{carrier\ bandwidth} + N_{grid,x}^{start,\mu} * b \qquad (8)$$

Specifically, the index $f_i^{CRB}$ of the subcarrier $f_i$ based on the CRB 0 in Examples 2.1 to 2.3 may be obtained by substituting Formula (1) or Formula (2) in Examples 2.1 to 2.3 into Formula (8).

If the first CRB is the start CRB of the BWP, the index $f_i^{CRB}$ of the subcarrier $f_i$ based on the CRB 0 may satisfy Formula (9), or may be determined by using Formula (9):

$$f_i^{CRB} = f_i^{BWP} + (N_{grid,x}^{start,\mu} + RB_{start}) * b \qquad (9)$$

Specifically, the index $f_i^{CRB}$ of the subcarrier $f_i$ based on the CRB 0 in Examples 3.1 to 3.3 may be obtained by substituting Formula (1) or Formula (2) in Examples 3.1 to 3.3 into Formula (9).

C3: The transmitting end may determine, based on the index $f_r^{BWP}$ that is of the subcarrier in the BWP and that is in the BWP, an index that is of the subcarrier in the BWP and that is based on the CRB 0.

An index $f_r^{CRB}$ that is of the subcarrier r in the BWP and that is based on the CRB 0 may satisfy Formula (10), or may be determined based on Formula (10):

$$f_r^{CRB} = f_r^{BWP} + (N_{grid,x}^{start,\mu} + RB_{start}) * b \qquad (10)$$

$f_r^{CRB}$ is the index of the subcarrier r in the carrier bandwidth. Formula (10) is described by using an example in which the index of the subcarrier in the carrier bandwidth counts from 0.

C4: The transmitting end determines the reserved carrier in the BWP based on the index that is of each subcarrier in the TR pattern and that is in the carrier bandwidth and the index that is of the subcarrier in the BWP and that is in the carrier bandwidth.

Specifically, the transmitting end may compare the index that is of each subcarrier in the TR pattern and that is based on the CRB 0 with the index that is of the subcarrier in the BWP and that is based on the CRB 0, where a subcarrier corresponding to a repeated index may be considered as the reserved carrier in the BWP.

In the foregoing implementation, the reserved carrier in the BWP may be determined by converting the index that is of the subcarrier in the BWP and that is in the BWP to the index that is of the subcarrier in the BWP and that is based on the CRB 0.

The foregoing embodiments of determining the reserved carrier in the BWP may be combined with each other to form different implementations. Details are not described herein again.

S502: The transmitting end outputs a time domain signal based on the reserved carrier in the BWP. Correspondingly, the receiving end receives the time domain signal.

Specifically, the transmitting end may output the time domain signal based on the process shown in FIG. 1.

Optionally, in FIG. 1, before channel encoding is performed on the original bit, a size of a transport block may be determined based on the reserved carrier in the BWP. Specifically, the transport block does not include an RE corresponding to the reserved carrier in the BWP.

In a specific implementation, the transmitting end may determine the transport block size by performing C1 to C4.

C1: The transmitting end determines a code rate R, a modulation order $Q_m$, a layer quantity v, and a PRB quantity $n_{PRB}$.

C2: The transmitting end determines a quantity $N_{RE}$ of REs on a physical shared channel, where the REs on the physical shared channel do not include the RE corresponding to the reserved carrier.

If the transmitting end is the network device, and the receiving end is the terminal device, the foregoing physical shared channel may be a physical downlink shared channel (physical downlink shared channel, PDSCH). If the transmitting end is the terminal device, and the receiving end is the network device, the foregoing physical shared channel may be a physical uplink shared channel (physical uplink shared channel, PUSCH).

In an implementation, C2 may be implemented in the following manner.

C2.1: The transmitting end determines a quantity $N'_{RE}$ of REs that are in each PRB on the physical shared channel and that are used for data transmission.

Specifically, the transmitting end may determine $N'_{RE}$ by using Formula (11), or $N'_{RE}$ satisfies Formula (11):

$$N'_{RE} = N^{RB}_{sc} \cdot N^{sh}_{symb} - N^{PRB}_{DMRS} - N^{PRB}_{oh} \tag{11}$$

$N^{RB}_{sc}$ indicates a quantity of subcarriers in one PRB, $N^{sh}_{symb}$ is a quantity of symbols allocated for signal transmission in one slot, $N^{PRB}_{DMRS}$ is a quantity of REs of a DMRS included in each PRB, and $N^{PRB}_{oh}$ is an overhead value. $N^{PRB}_{oh}$ is an overhead configured by using a higher-layer parameter xOverhead (for example, an xOverhead parameter carried in signaling PDSCH-ServingCellConfig or PUSCH-ServingCellConfig), and the xOverhead parameter may be selected from 0, 6, 12, or 18. If the xOverhead parameter is not configured, $N^{PRB}_{oh}$ may be set to 0. If cyclic redundancy check (cyclic redundancy check, CRC) of a physical downlink control channel (physical downlink control channel, PDCCH) for scheduling the PDSCH is scrambled by using a system information radio network temporary identifier (system information RNTI, SI-RNTI), a random access radio network temporary identifier (random access RNTI, RA-RNTI), or a paging radio network temporary identifier (paging RNTI, P-RNTI), $N^{PRB}_{oh}$ may be set to 0. For uplink Msg3 transmission, $N^{PRB}_{oh}$ may be set to 0.

C2.2: The transmitting end determines $N_{RE}$ based on $N'_{RE}$ and a quantity of REs corresponding to the reserved carrier on the physical shared channel.

$N_{RE}$ may be determined by using Formula (12) or Formula (13), or $N_{RE}$ satisfies Formula (12) or Formula (13):

$$N_{RE} = \min(156, N'_{RE}) * n_{PRB} - N^{RT\_slot}_{RE} \tag{12}$$

$$N_{RE} = \min\left(156 * n_{PRB} - N^{RT_{slot}}_{RE}, N'_{RE} * n_{PRB} - N^{RT\_slot}_{RE}\right) \tag{13}$$

$n_{PRB}$ indicates a quantity of allocated PRBs. $N^{RT\_slot}_{RE}$ indicates the quantity of REs corresponding to the reserved carrier on the physical shared channel.

It is assumed that all symbols in one slot use a same TR pattern, in other words, PRBs on the physical shared channel use a same TR pattern. Based on the assumption, $N^{RT\_slot}_{RE} = N^{sh}_{symb} * N^{RT}_{RE}$. $N^{RT}_{RE}$ indicates a quantity of reserved carriers occupied by the TR solution in a PRB allocated to the UE (or a bandwidth allocated to the UE) (in other words, a bandwidth, BWP, or PRB of one symbol allocated to the UE includes the quantity of reserved subcarriers occupied by the TR solution).

It is assumed that at least two symbols in one slot use different TR patterns, in other words, one slot uses at least two TR patterns. Alternatively, it may be understood that at least two PRBs on the physical shared channel use different TR patterns. Based on the assumption, $N_{RE}^{RT\_slot} = \sum_{1}^{N_{symb}^{sh}} N_{RE}^{RT}(i)$. For example, $N_{symb}^{sh} = 14$. In one slot, a symbol 1 and a symbol 2 use a first TR pattern, and a quantity of reserved carriers of each symbol in the first TR pattern is n1. Other symbols 3 to 14 in the slot use a second TR pattern, and a quantity of reserved carriers of each symbol in the first TR pattern is n2. $N_{RE}^{RT\_slot} = 2 * n1 + 12 * n2$.

C3: The transmitting end calculates a quantity $N_{info}$ of information bits that can be carried by the RE allocated in the slot.

For example, $N_{info}$ may be determined by using the following formula, or satisfies the following formula:

$$N_{info} = N_{RE} \times Q_m \times v \times R.$$

C4: The transmitting end determines the transport block size TBS based on the quantity $N_{info}$ of information bits.

In a possible implementation, the transmitting end may determine the TBS based on $N_{info}$ through calculation by using a formula or through table lookup. A method for determining the TBS through calculation by using a formula or through table lookup belongs to the conventional technology. Details are not described herein.

In the foregoing manner, the reserved carrier is removed when the TBS is determined, so that a PAPR suppression solution can be adapted.

Optionally, the resource mapping process in FIG. 1 may be implemented in the following manner: mapping physical channel information to at least one RE, where the at least one RE satisfies the following condition: the at least one RE does not overlap the RE corresponding to the reserved carrier in the BWP.

In an example description, for downlink transmission, the transmitting end is the network device, and the receiving end is the terminal device. For each antenna port used for physical channel information transmission, physical channel information $y^{(p)}(0), \ldots, y^{(p)}(M_{symb}^{ap} - 1)$ meets downlink power allocation, and the transmitting end may sequentially map the physical channel information to resource elements of a virtual resource block starting from $y^{(p)}(0)$. The resource elements of the virtual resource block to which the physical channel information is mapped need to satisfy any one of the following standards:

- Virtual resource block allocated for transmission.
- PRB declared as available for PDSCH transmission.

  ▪ If a PDSCH resource allocated to the receiving end overlaps an RE used for the PAPR suppression (or for tone reservation), the receiving end may assume that the RE used for the PAPR suppression in the OFDM symbol cannot be used for the PDSCH transmission. The RE used for the PAPR suppression (or for the tone reservation) may be understood as the RE corresponding to the reserved carrier.

- RE that satisfies the following conditions in the PRB:

  ▪ Not used for transmission of a related demodulation reference signal (demodulation reference signal, DM-RS) or a DM-RS of another jointly scheduled UE.
  ▪ Not used for transmission of non-zero power channel state information reference signal (channel state information reference signal, CSI-RS), where the non-zero power CSI-RS is not configured by a higher-layer parameter CSI-RS-Resource-Mobility, and is not an aperiodic non-zero power CSI-RS resource.
  ▪ Not used for transmission of a phase-tracking reference signal (phase-tracking reference signal, PT-RS).
  ▪ Not declared as unavailable for the PDSCH transmission.
  ▪ Not used for PAPR suppression or tone reservation solutions. The "not used for PAPR suppression or tone reservation solutions" may be understood as that the RE is not the RE corresponding to the reserved carrier.

In an example description, for uplink transmission, the transmitting end is the terminal device, and the receiving end is the network device. For each antenna port used for physical channel information transmission, the transmitting end may sequentially map, starting from $z^{(p)}(0)$, physical channel information $z^{(p)}(0), \ldots, z^{(p)}(M_{symb}^{ap} - 1)$ to resource elements in a virtual resource block used for transmission. The resource elements in the virtual resource block to which the physical channel information is mapped need to satisfy the following standards:

- Virtual resource block allocated for transmission.

- An RE in the PRB is not used for transmission of a related DM-RS, a PT-RS, or a DM-RS of another jointly scheduled UE.
- An RE in the PRB is not used for PAPR suppression or tone reservation solutions. The "not used for PAPR suppression or tone reservation solutions" may be understood as that the RE is not the RE corresponding to the reserved carrier.

In the foregoing manner, the reserved carrier is removed during resource mapping, so that a PAPR suppression solution can be adapted.

Optionally, the foregoing resource mapping process may further include: mapping the virtual resource block to the physical resource block. To be specific, after the physical channel information is mapped to the virtual resource block according to the foregoing solution, the virtual resource block is mapped to the physical resource block. The virtual resource block may be mapped to the physical resource block in either of the following two implementations: (1) an interleaved (interleaved) manner; and (2) a non-interleaved (non-interleaved) manner. To avoid affecting PAPR suppression performance of the reserved carrier in the TR solution, it may be agreed that, when the PAPR suppression solution (for example, the TR solution) is used, it is agreed that the virtual resource block is mapped to the physical resource block in the non-interleaved manner.

Optionally, when the PAPR suppression technology (for example, the TR solution) is used, the network device may send signaling to the terminal device to indicate whether to map the virtual resource block to the physical resource block in the interleaved manner.

For example, the network device uses higher-layer signaling vrb-ToPRB-Interleaver to indicate whether to use the interleaved manner. If the signaling vrb-ToPRB-Interleaver is not sent, it indicates that the non-interleaved manner is used. If the signaling vrb-ToPRB-Interleaver is sent, it indicates that the interleaved manner is used. The signaling vrb-ToPRB-Interleaver may carry an interleaving quantity unit, for example, two PRBs or four PRBs.

For another example, the network device may alternatively use DCI to indicate whether to map the virtual resource block to the physical resource block in the interleaved manner in this scheduling transmission. Optionally, the network device and the terminal device may agree on the interleaving quantity unit, for example, may agree that the interleaving quantity unit is one RB.

In an implementation, when the PAPR suppression technology is used, if the network device indicates to map the virtual resource block to the physical resource block in the interleaved manner, de-interleaving processing or de-interleaving processing (namely, processing opposite to interleaving) may be performed on a subcarrier number in the TR pattern, to obtain an updated TR pattern. The transmitting end and the receiving end may use the updated TR pattern to perform the foregoing operations such as determining the reserved carrier in the BWP, determining the transport block size, performing mapping to the virtual resource block, and mapping the virtual resource block to the physical resource block. An objective of the de-interleaving processing is to perform interleaving on the reserved carrier in the updated TR pattern to map the virtual resource block to the physical resource block and then obtain a reserved carrier that is the same as that in the original TR pattern. In this way, a PAPR suppression effect is not affected.

The following describes the de-interleaving processing by using an example. For example, it is assumed that after interleaving is performed on data sorted as a1, a2, and a3 to map the virtual resource block to the physical resource block, sorting is a2, a3, and a1. In this case, the de-interleaving processing is to change the data sorted as a1, a2, and a3 to data sorted as a3, a1, and a2. Therefore, after interleaving is performed on the data a3, a1, and a2 obtained after the de-interleaving, to map the virtual resource block to the physical resource block, sorting is a1, a2, and a3, and the original data sequence is restored after the interleaving. In this way, a location of the reserved carrier of the original TR pattern can be restored. This ensures that a PAPR suppression effect is not affected.

Optionally, an implementation that can replace the de-interleaving processing is: The transmitting end and the receiving end may agree on the original TR pattern and the updated TR pattern. The transmitting end and the receiving end may determine to use the original TR pattern or the updated TR pattern depending on whether the network device indicates to determine to use the interleaved manner to map the virtual resource block to the physical resource block. For example, if the network device indicates to use the interleaved manner, the transmitting end and the receiving end may use the original TR pattern. If the network device indicates not to use the interleaved manner, the transmitting end and the receiving end may use the updated TR pattern. For another example, the transmitting end and the receiving end may alternatively agree that a plurality of TR patterns are mapped to not using the interleaved manner, using the interleaved manner (an interleaving unit is two RBs), and using the interleaved manner (an interleaving unit is four RBs). The transmitting end and the receiving end determine a to-be-used TR pattern depending on whether the network device indicates to determine to use the interleaved manner and/or based on an interleaving unit. For example, if the network device indicates to use the interleaved manner and indicates that the interleaving unit is four RBs, the transmitting end and the receiving end use a TR pattern mapped to using the interleaved manner (the interleaving unit is four RBs).

Optionally, the OFDM symbol generation process in FIG. 1 may be implemented in the following manner: performing discrete fourier transform DFT/inverse discrete fourier transform IDFT modulation on a subcarrier, other than the reserved carrier in the BWP, that is included in a carrier bandwidth in which the BWP is located, to obtain the time domain signal.

Specifically, for an antenna port p, in a subcarrier spacing configuration μ, a time-continuous signal $s_l^{(p,\mu)}(t)$ of an OFDM symbol $l \in \left\{ 0,1,\ldots,N_{\text{slot}}^{\text{subframe},\mu} N_{\text{symb}}^{\text{slot}} - 1 \right\}$ may satisfy Formula (14), or may be determined based on Formula (14):

$$s_l^{(p,\mu)}(t) = \begin{cases} \bar{s}_l^{(p,\mu)}(t) & t_{\text{start},l}^{\mu} \le t < t_{\text{start},l}^{\mu} + T_{\text{symb},l}^{\mu} \\ 0 & \text{otherwise} \end{cases} \tag{14}$$

$$\bar{s}_l^{(p,\mu)}(t) = \sum_{k=0,k\notin R}^{N_{\text{grid},x}^{\text{size},\mu} N_{\text{sc}}^{\text{RB}}-1} a_{k,l}^{(p,\mu)} e^{j2\pi\left(k+k_0^{\mu}-N_{\text{grid},x}^{\text{size},\mu} N_{\text{sc}}^{\text{RB}}/2\right)\Delta f\left(t-N_{\text{CP},l}^{\mu}T_{\text{c}}-t_{\text{start},l}^{\mu}\right)};$$

$$k_0^{\mu} = \left(N_{\text{grid},x}^{\text{start},\mu} + N_{\text{grid},x}^{\text{size},\mu}/2\right) N_{\text{sc}}^{\text{RB}} - \left(N_{\text{grid},x}^{\text{start},\mu_0} + N_{\text{grid},x}^{\text{size},\mu_0}/2\right) N_{\text{sc}}^{\text{RB}} 2^{\mu_0-\mu}; \text{ and}$$

$$T_{\text{symb},l}^{\mu} = \left(N_{\text{u}}^{\mu} + N_{\text{CP},l}^{\mu}\right)T_{\text{c}}.$$

k indicates a carrier index (subcarrier index).

l indicates a symbol index (symbol index).

R indicates an index set of reserved carriers. For example, the reserved carrier herein may be a subcarrier index based on the carrier bandwidth or a carrier index based on the BWP.

t=0 is the start of a subframe. $t_{\text{start},l}^{\mu} \le t < t_{\text{start},l}^{\mu} + T_{\text{symb},l}^{\mu}$ is time of the OFDM symbol l.

$$N_{\text{u}}^{\mu} = 2048\kappa \cdot 2^{-\mu}$$

$$N_{\text{CP},l}^{\mu} = \begin{cases} 512\kappa \cdot 2^{-\mu} & \text{extended cyclic prefix} \\ 144\kappa \cdot 2^{-\mu} + 16\kappa & \text{normal cyclic prefix, } l = 0 \text{ or } l = 7 \cdot 2^{\mu} \\ 144\kappa \cdot 2^{-\mu} & \text{normal cyclic prefix, } l \ne 0 \text{ and } l \ne 7 \cdot 2^{\mu} \end{cases}.$$

Start time of the OFDM symbol l of the subcarrier spacing configuration μ in the subframe is

$$t_{\text{start},l}^{\mu} = \begin{cases} 0 & l = 0 \\ t_{\text{start},l-1}^{\mu} + \left(N_{\text{u}}^{\mu} + N_{\text{CP},l-1}^{\mu}\right) \cdot T_{\text{c}} & \text{otherwise} \end{cases}.$$

Δf is a subcarrier spacing (subcarrier spacing), where Δf = 2^μ * 15 kHz.

$\mu_0$ is a maximum subcarrier spacing parameter value in a subcarrier spacing configuration indicated by a higher-layer parameter (higher-layer parameter) scs-SpecificCarrierList. $N_{\text{grid},x}^{\text{size},\mu}$ is a quantity of RBs indicated by carrier-Bandwidth in a higher-layer parameter SCS-SpecificCarrier. A bandwidth is indicated by a PRB quantity. $N_{\text{grid},x}^{\text{start},\mu}$ is a start resource block index (RB index) indicated by offsetToCarrier in the higher-layer parameter SCS-SpecificCarrier. offsetToCarrier indicates an offset between a lowest-frequency available subcarrier of a carrier (carrier) and the point A, and is indicated by the PRB quantity (a subcarrier spacing of the carrier).

x may indicate an uplink (uplink) or a downlink (downlink). $a_{k,l}^{(p,\mu)}$ indicates a subcarrier k, and is content carried on an RE of the OFDM symbol l. When k ∈ R, $a_{k,l}^{(p,\mu)} = 0$, in other words, no data is carried on the carrier k. $N_{\text{sc}}^{\text{RB}}$ indicates a quantity of subcarriers in one RB, and $N_{\text{sc}}^{\text{RB}} = 12$.

κ indicates a conversion value between time units, and κ=64.

Tc indicates a time unit quantity, and Tc=1/(Δfmax·Nf)=1/(480*103*4096)≈0.5086 ns. $N_{\text{slot}}^{\text{subframe},\mu}$ indicates a quantity of slots included in one subframe in the subcarrier spacing configuration μ, and $N_{\text{symb}}^{\text{slot}}$ indicates a quantity of symbols included in one slot.

In Formula (14), when data carried on each subcarrier is modulated, the reserved carrier is skipped, that is, the subcarrier index $k \in [0, N_{\text{grid,x}}^{\text{size},\mu} N_{\text{sc}}^{\text{RB}} - 1]$ and $k \notin R$, and all subcarriers except the carriers in the R set are superposed.

In the foregoing manner, the reserved carrier is removed when a time domain OFDM/DFT-S-OFDM symbol is generated, so that the PAPR suppression solution can be adapted.

Optionally, after generating the time domain OFDM/DFT-S-OFDM symbol, the transmitting end may perform the PAPR suppression on the symbol by using the TR method and the reserved carrier. Then, a symbol obtained through the PAPR suppression is input to a subsequent processing module, for example, a cyclic prefix addition module or a digital-to-analog converter.

S503: The receiving end determines the reserved carrier in the BWP.

In a possible implementation, if the transmitting end is the network device, and the receiving end is the terminal device, the transmitting end (namely, the network device) may send first information to the receiving end (namely, the terminal device), where the first information indicates the reserved carrier in the BWP, so that the receiving end can determine the reserved carrier in the BWP based on the first information. Specifically, the first information may indicate a quantity of reserved carriers and/or locations of the reserved carriers in the BWP.

In another possible implementation, the receiving end may alternatively determine the reserved carrier in the BWP based on second information. The second information includes the TR pattern and the first correspondence. In this implementation, a correspondence between a subcarrier index in the TR pattern and a BWP subcarrier index may be agreed on by using a protocol, to determine the quantity of reserved subcarriers and/or the locations of the reserved subcarriers to be used by the network device and the terminal device.

Specifically, for an implementation in which the receiving end determines the reserved carrier in the BWP based on the TR pattern and the first correspondence, refer to the related descriptions of S501. Details are not described herein again.

S504: The receiving end parses the time domain signal based on the reserved carrier in the BWP.

Specifically, the receiving end may parse the time domain signal based on a subcarrier, other than the reserved carrier in the BWP, that is included in the carrier bandwidth in which the BWP is located.

Optionally, after parsing the time domain signal, the receiving end may perform resource demapping on at least one resource element RE based on the reserved carrier in the BWP, where the at least one RE satisfies the following condition: the at least one RE does not overlap the RE corresponding to the reserved carrier in the BWP. This process corresponds to a process in which the transmitting end performs resource mapping on the physical channel information. For details, refer to example descriptions of the resource mapping performed by the transmitting end. Details are not described herein again.

Optionally, after parsing the time domain signal, for example, after de-interleaving, the receiving end may determine the transport block size based on the reserved carrier in the BWP, where the transport block does not include the RE corresponding to the reserved carrier in the BWP, and the receiving end may perform channel decoding based on the transport block size. This process corresponds to a process in which the transmitting end determines the TBS and performs the channel encoding. For details, refer to related descriptions of a transmitting end side. Details are not described herein again.

In this embodiment of this application, the RE corresponding to the reserved carrier is removed in the TBS determining, resource mapping, and OFDM symbol generation processes, so that the TR technology can adapt to an NR system. This reduces impact of the reserved carrier on TBS determining, resource mapping/demapping, and OFDM symbol generation/parsing by the receiving end/transmitting end, and improves communication performance.

Signaling in this application, for example, signaling that carries the first information and/or the second information, the quantity of reserved carriers and/or the locations of the reserved carriers corresponding to the BWP, and the like may be included in at least one of broadcast information such as a system information block (system information block, SIB) 1, other system information (other system information, OSI), and a master information block (master information block, MIB), and is sent by the network device to the terminal device in a broadcast or multicast manner. Sending the foregoing signaling to the terminal device in the broadcast or multicast manner can avoid scheduling different resources for different terminal devices to send the foregoing signaling, reduce signaling overheads of scheduling resources, and reduce system scheduling complexity.

In addition, if the signaling is sent in a radio resource control (radio resource control, RRC) connection establishment phase and a subsequent communication process, the network device may indicate the foregoing information such as the first information to the terminal device by using at least one of RRC signaling (for example, an RRC setup (RRCsetup) message, RRC reconfiguration signaling (RRCReconfiguration), or RRC resume signaling (RRCResume)), downlink control information (downlink control information, DCI), group DCI, and a media access control (media access control, MAC) control element (control element, CE), or in a table manner. Alternatively, transmission of the signaling is performed with data. Alternatively, the signaling is carried on a separately allocated PDSCH bearer and sent to the terminal device in the unicast or multicast manner. An advantage of sending the foregoing signaling to the terminal device separately or in a group is that a parameter value of each terminal device/each group of terminal devices can be flexibly controlled, and different parameter values are configured for the terminal device based on different link budgets of different locations, different areas, or the like of the terminal device, to optimize system transmit power efficiency and optimize terminal device communication performance/system communication performance. For example, different TR patterns and different quantities of reserved carriers may be configured to be used based on different geographical locations of the terminal device, different required link budgets, and different requirements for transmit signal power, to optimize PAPR suppression performance of each terminal device/each group of terminal devices, avoid excessive waste of spectrum resources, and improve overall communication performance of the terminal device and the system.

Based on a same inventive concept as the method embodiments, an embodiment of this application provides a communication apparatus. A structure of the communication apparatus may be shown in FIG. 9, and the communication apparatus includes a communication unit 901 and a processing unit 902.

In an implementation, the communication apparatus may be specifically configured to implement the method performed by the transmitting end in the embodiment in FIG. 5. The apparatus may be the transmitting end, or may be a chip, a chipset, or a part, that is of the chip and that is configured to perform a related method function, in the transmitting end. The communication unit 901 is configured to communicate with a receiving end. The processing unit 902 is configured to: determine a reserved carrier in a BWP based on a TR pattern and a first correspondence, where the TR pattern includes a set of subcarriers used as reserved carriers, and the first correspondence is a correspondence between an index of a subcarrier and an index based on a first CRB; and output a time domain signal based on the reserved carrier in the BWP via the communication unit 901.

For example, the first CRB is a start CRB of a carrier bandwidth; the first CRB is a 1st CRB; or the first CRB is a start CRB of the BWP.

For example, an index that is of the subcarrier in the TR pattern and that is based on the first CRB is determined based on the index that is of the subcarrier in the TR pattern and that is in the TR pattern, a value obtained by subtracting an index of the first CRB from an index of a second CRB, and a quantity of subcarriers included in one CRB, a location of a 1st subcarrier of the second CRB is the same as a location of a subcarrier A, and the subcarrier A is a subcarrier whose index is 0 or 1 in a counting manner of the TR pattern.

For example, the index of the subcarrier in the TR pattern counts from 0, and an index $f_i^{\text{first } CRB}$ that is of an $i^{\text{th}}$ subcarrier in the TR pattern and that is based on the first CRB satisfies the following formula, where $f_i$ is an index of the subcarrier in the TR pattern, and i is an integer greater than 0:

$$f_i^{\text{first } CRB}=f_i+\text{a*b},$$

where

a is the value obtained by subtracting the index of the first CRB from the index of the second CRB, and b is the quantity of subcarriers included in one CRB; or

the index that is of the subcarrier in the TR pattern and that is in the TR pattern counts from 1, and an index $f_i^{\text{first } CRB}$ that is of an $i^{\text{th}}$ subcarrier $f_i$ in the TR pattern and that is based on the first CRB satisfies the following formula, where $f_i$ is an index of the subcarrier in the TR pattern, and i is an integer greater than 0:

$$f_i^{CRB}=f_i+\text{a*b}-1,$$

where
a is the value obtained by subtracting the index of the first CRB from the index of the second CRB, and b is the quantity of subcarriers included in one CRB.

Optionally, when determining the reserved carrier in the bandwidth part BWP based on the tone reservation TR pattern and the first correspondence, the processing unit 902 is specifically configured to:

determine, based on the first correspondence, an index that is of each subcarrier in the TR pattern and that is based on the first CRB; and

determine the reserved carrier in the BWP based on the index that is of each subcarrier in the TR pattern and that is based on the first CRB and the index that is of the subcarrier included in the BWP and that is based on the CRB 0.

Optionally, the processing unit 902 is further configured to:

before outputting the time domain signal based on the reserved carrier in the BWP, determine a size of a transport block, where the transport block does not include a resource element RE corresponding to the reserved carrier in the BWP.

Optionally, the processing unit 902 is further configured to:

before outputting the time domain signal based on the reserved carrier in the BWP, map physical channel information to at least one RE, where

the at least one RE satisfies the following condition: the at least one RE does not overlap the RE corresponding to the reserved carrier in the BWP.

Optionally, the processing unit 902 is further configured to:

before outputting the time domain signal based on the reserved carrier in the BWP, perform discrete fourier transform DFT/inverse discrete fourier transform IDFT modulation on a subcarrier, other than the reserved carrier in the BWP, that is included in a carrier bandwidth in which the BWP is located, to obtain the time domain signal.

In an implementation, the communication apparatus shown in FIG. 9 may be specifically configured to implement the method performed by the receiving end in the embodiment in FIG. 5. The apparatus may be the receiving end, or may be a chip, a chipset, or a part, that is of the chip and that is configured to perform a related method function, in the receiving end. The communication unit 901 is configured to receive a time domain signal. The processing unit 902 is configured to: determine a reserved carrier in a BWP based on first information or second information, where the first information is from a transmitting end and indicates the reserved carrier in the BWP, and the second information includes a TR pattern and a first correspondence, where the TR pattern includes a set of subcarriers used as reserved carriers, and the first correspondence is a correspondence between a subcarrier index and a first CRB index; and parse the time domain signal based on the reserved carrier in the BWP.

For example, the first CRB is a start CRB of a carrier bandwidth; the first CRB is a 1st CRB; or the first CRB is a start CRB of the BWP.

For example, the index that is of the subcarrier in the TR pattern and that is based on the first CRB is determined based on the index that is of the subcarrier in the TR pattern and that is in the TR pattern, a value obtained by subtracting an index of the first CRB from an index of a second CRB, and a quantity of subcarriers included in one CRB, a location of a 1st subcarrier of the second CRB is the same as a location of a subcarrier A, and the subcarrier A is a subcarrier whose index is 0 or 1 in a counting manner of the TR pattern.

For example, the index that is of the subcarrier in the TR pattern and that is in the TR pattern counts from 0, and an index $f_i^{CRB}$ that is of an $i^{th}$ subcarrier $f_i$ in the TR pattern and that is based on the first CRB satisfies the following formula, where $f_i$ is an index of the subcarrier in the TR pattern, and i is an integer greater than 0:

$$f_i^{CRB}=f_i+a*b,$$

where

a is the value obtained by subtracting the index of the first CRB from the index of the second CRB, and b is the quantity of subcarriers included in one CRB; or

the index that is of the subcarrier in the TR pattern and that is in the TR pattern counts from 1, and an index $f_i^{CRB}$ that is of an $i^{th}$ subcarrier $f_i$ in the TR pattern and that is based on the first CRB satisfies the following formula, where $f_i$ is an index of the subcarrier in the TR pattern, and i is an integer greater than 0:

$$f_i^{CRB}=f_i+a*b-1,$$

where

a is the value obtained by subtracting the index of the first CRB from the index of the second CRB, and b is the quantity of subcarriers included in one CRB.

Optionally, when determining the reserved carrier in the bandwidth part BWP based on the second information, the processing unit 902 is specifically configured to: determine, based on the first correspondence, an index that is of each subcarrier in the TR pattern and that is based on the first CRB; and determine the reserved carrier in the BWP based on the index that is of each subcarrier in the TR pattern and that is based on the first CRB and an index that is of a subcarrier included in the BWP and that is based on the CRB 0.

Optionally, when parsing the time domain signal based on the reserved carrier in the BWP, the processing unit 902 is specifically configured to parse the time domain signal based on a subcarrier, other than the reserved carrier in the BWP, that is included in a carrier bandwidth in which the BWP is located.

Optionally, the processing unit 902 is further configured to: after parsing the time domain signal based on the reserved carrier in the BWP, perform resource demapping on at least one resource element RE based on the reserved carrier in the BWP, where the at least one RE satisfies the following condition: the at least one RE does not overlap an RE corresponding to the reserved carrier in the BWP.

Optionally, the processing unit 902 is further configured to: after parsing the time domain signal based on the reserved carrier in the BWP, determine a size of a transport block based on the reserved carrier in the BWP, where the transport block does not include the resource element RE corresponding to the reserved carrier in the BWP; and perform channel decoding based on the transport block size.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related descriptions in the method embodiments.

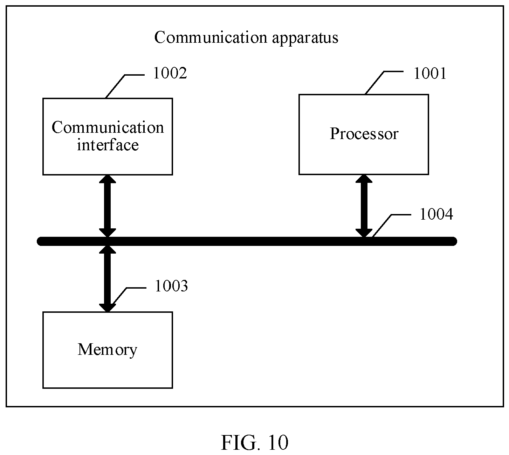

In a possible manner, the communication apparatus may be shown in FIG. 10. The apparatus may be a communication device or a chip in the communication device. The communication device may be the terminal device in the foregoing embodiments, or may be the network device in the foregoing embodiments. The apparatus includes a processor 1001 and a communication interface 1002, and may further include a memory 1003. The processing unit 902 may be the processor 1001. The communication unit 901 may be the communication interface 1002. Optionally, the processor 1001 and the memory 1003 may alternatively be integrated together.

The processor 1001 may be a CPU, a digital processing unit, or the like. The communication interface 1002 may be a transceiver, an interface circuit such as a transceiver circuit, a transceiver chip, or the like. The apparatus further includes the memory 1003, configured to store a program executed by the processor 1001. The memory 1003 may be a nonvolatile memory such as a hard disk drive (hard disk drive, HDD) or a solid-state drive (solid-state drive, SSD), or may be a volatile memory (volatile memory), for example, a random access memory (random access memory, RAM). The memory 1003 is any other medium that can carry or store expected program code in a form of an instruction or a data structure and that can be accessed by a computer, but is not limited thereto.

The processor 1001 is configured to execute the program code stored in the memory 1003, and is specifically configured to perform an action of the processing unit 902. Details are not described herein again in this application. The communication interface 1002 is specifically configured to perform an action of the communication unit 901. Details are not described herein again in this application.

A specific connection medium between the communication interface 1002, the processor 1001, and the memory 1003 is not limited in this embodiment of this application. In this embodiment of this application, in FIG. 10, the memory 1003, the processor 1001, and the communication interface 1002 are connected to each other through a bus 1004. The bus is represented by a bold line in FIG. 10. A connection manner between other components is merely an example for description, and imposes no limitation. The bus can be divided into an address bus, a data bus, a control bus, and the like. For ease of representation, only one thick line is for representing the bus in FIG. 10, but this does not mean that there is only one bus or only one type of bus.

An embodiment of the present invention further provides a computer-readable storage medium, configured to store computer software instructions that need to be executed for execution of the foregoing processor, and the computer-readable storage medium includes a program that needs to be executed for execution of the foregoing processor.

An embodiment of this application further provides a communication system, including a communication apparatus configured to implement functions of the transmitting end in the embodiment in FIG. 5 and a communication apparatus configured to implement functions of the receiving end in the embodiment in FIG. 5.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, and an optical memory) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A communication method, comprising:

   determining a reserved carrier in a bandwidth part BWP based on a tone reservation TR pattern and a first correspondence, wherein the TR pattern comprises a set of subcarriers used as reserved carriers, and the first correspondence is a correspondence between an index that is of a subcarrier in the TR pattern and that is in the TR pattern and an index that is of the subcarrier in the TR pattern and that is based on a first common resource block CRB; and
   outputting a time domain signal based on the reserved carrier in the BWP.

2. The method according to claim 1, wherein

   the first CRB is a start CRB of a carrier bandwidth; or
   the first CRB is a 1st CRB; or
   the first CRB is a start CRB of the BWP.

3. The method according to claim 1 or 2, wherein the index that is of the subcarrier in the TR pattern and that is based on the first CRB is determined based on the index that is of the subcarrier in the TR pattern and that is in the TR pattern, a value obtained by subtracting an index of the first CRB from an index of a second CRB, and a quantity of subcarriers comprised in one CRB, a location of a 1st subcarrier of the second CRB is the same as a location of a subcarrier A, and the subcarrier A is a subcarrier whose index is 0 or 1 in a counting manner of the TR pattern.

4. The method according to claim 3, wherein the index that is of the subcarrier in the TR pattern and that is in the TR pattern counts from 0, and an index $f_i^{\text{first } CRB}$ that is of an ith subcarrier $f_i$ in the TR pattern and that is based on the first CRB satisfies the following formula, wherein $f_i$ is an index of the subcarrier in the TR pattern, and $i$ is an integer greater than 0:

$$f_i^{\text{first } CRB} = f_i + a*b,$$

wherein

a is the value obtained by subtracting the index of the first CRB from the index of the second CRB, and b is the quantity of subcarriers comprised in one CRB; or

the index that is of the subcarrier in the TR pattern and that is in the TR pattern counts from 1, and an index $f_i^{\text{first } CRB}$ that is of an $i^{\text{th}}$ subcarrier $f_i$ in the TR pattern and that is based on the first CRB satisfies the following formula, wherein $f_i$ is an index of the subcarrier in the TR pattern, and i is an integer greater than 0:

$$f_i^{\text{first } CRB} = f_i + a*b - 1,$$

wherein

a is the value obtained by subtracting the index of the first CRB from the index of the second CRB, and b is the quantity of subcarriers comprised in one CRB.

5. The method according to any one of claims 1 to 4, wherein the determining a reserved carrier in a bandwidth part BWP based on a tone reservation TR pattern and a first correspondence comprises:

determining, based on the first correspondence, an index that is of each subcarrier in the TR pattern and that is based on the first CRB;

determining an index that is of a subcarrier in the BWP and that is based on the first CRB; and

determining the reserved carrier in the BWP based on the index that is of each subcarrier in the TR pattern and that is based on the first CRB and the index that is of the subcarrier in the BWP and that is based on the first CRB.

6. The method according to any one of claims 1 to 5, wherein before the outputting a time domain signal based on the reserved carrier in the BWP, the method further comprises:

determining a size of a transport block, wherein the transport block does not comprise a resource element RE corresponding to the reserved carrier in the BWP.

7. The method according to any one of claims 1 to 6, wherein before the outputting a time domain signal based on the reserved carrier in the BWP, the method further comprises:

mapping physical channel information to at least one RE, wherein

the at least one RE satisfies the following condition: the at least one RE does not overlap the RE corresponding to the reserved carrier in the BWP.

8. The method according to any one of claims 1 to 7, wherein before the outputting a time domain signal based on the reserved carrier in the BWP, the method further comprises:

performing discrete fourier transform DFT/inverse discrete fourier transform IDFT modulation on a subcarrier, other than the reserved carrier in the BWP, that is comprised in a carrier bandwidth in which the BWP is located, to obtain the time domain signal.

9. A communication method, comprising:

receiving a time domain signal;

determining a reserved carrier in a bandwidth part BWP based on first information or second information, wherein the first information is from a transmitting end and indicates the reserved carrier in the BWP, the second information comprises a tone reservation TR pattern and a first correspondence, the TR pattern comprises a set of subcarriers used as reserved carriers, and the first correspondence is a correspondence between an index that is of a subcarrier in the TR pattern and that is in the TR pattern and an index that is of the subcarrier in the TR pattern and that is based on a first common resource block CRB; and

parsing the time domain signal based on the reserved carrier in the BWP.

10. The method according to claim 9, wherein

the first CRB is a start CRB of a carrier bandwidth; or

the first CRB is a $1^{\text{st}}$ CRB; or

the first CRB is a start CRB of the BWP.

11. The method according to claim 9 or 10, wherein the index that is of the subcarrier in the TR pattern and that is based on the first CRB is determined based on the index that is of the subcarrier in the TR pattern and that is in the TR pattern, a value obtained by subtracting an index of the first CRB from an index of a second CRB, and a quantity of subcarriers comprised in one CRB, a location of a $1^{st}$ subcarrier of the second CRB is the same as a location of a subcarrier A, and the subcarrier A is a subcarrier whose index is 0 or 1 in a counting manner of the TR pattern.

12. The method according to claim 11, wherein the index that is of the subcarrier in the TR pattern and that is in the TR pattern counts from 0, and an index $f_i^{\text{first } CRB}$ that is of an $i^{th}$ subcarrier $f_i$ in the TR pattern and that is based on the first CRB satisfies the following formula, wherein $f_i$ is an index of the subcarrier in the TR pattern, and i is an integer greater than 0:

$$f_i^{\text{first } CRB}=f_i+a*b,$$

wherein

a is the value obtained by subtracting the index of the first CRB from the index of the second CRB, and b is the quantity of subcarriers comprised in one CRB; or
the index that is of the subcarrier in the TR pattern and that is in the TR pattern counts from 1, and an index $f_i^{\text{first } CRB}$ that is of an $i^{th}$ subcarrier $f_i$ in the TR pattern and that is based on the first CRB satisfies the following formula, wherein $f_i$ is an index of the subcarrier in the TR pattern, and i is an integer greater than 0:

$$f_i^{\text{first } CRB}=f_i+a*b-1,$$

wherein
a is the value obtained by subtracting the index of the first CRB from the index of the second CRB, and b is the quantity of subcarriers comprised in one CRB.

13. The method according to any one of claims 9 to 12, wherein the determining a reserved carrier in a BWP based on second information comprises:

determining, based on the first correspondence, an index that is of each subcarrier in the TR pattern and that is based on the first CRB; and
determining the reserved carrier in the BWP based on the index that is of each subcarrier in the TR pattern and that is based on the first CRB and an index that is of a subcarrier comprised in the BWP and that is based on the first CRB.

14. The method according to any one of claims 9 to 13, wherein the parsing the time domain signal based on the reserved carrier in the BWP comprises:
parsing the time domain signal based on a subcarrier, other than the reserved carrier in the BWP, that is comprised in a carrier bandwidth in which the BWP is located.

15. The method according to any one of claims 9 to 14, wherein after the parsing the time domain signal based on the reserved carrier in the BWP, the method further comprises:
performing resource demapping on at least one resource element RE based on the reserved carrier in the BWP, wherein the at least one RE satisfies the following condition: the at least one RE does not overlap an RE corresponding to the reserved carrier in the BWP.

16. The method according to any one of claims 9 to 15, wherein after the parsing the time domain signal based on the reserved carrier in the BWP, the method further comprises:

determining a size of a transport block based on the reserved carrier in the BWP, wherein the transport block does not comprise the resource element RE corresponding to the reserved carrier in the BWP; and
performing channel decoding based on the transport block size.

17. A communication apparatus, comprising:

a communication unit, configured to communicate with a receiving end; and

a processing unit, configured to: determine a reserved carrier in a bandwidth part BWP based on a tone reservation TR pattern and a first correspondence, wherein the TR pattern comprises a set of subcarriers used as reserved carriers, and the first correspondence is a correspondence between an index that is of a subcarrier in the TR pattern and that is in the TR pattern and an index that is of the subcarrier in the TR pattern and that is based on a first common resource block CRB; and

output a time domain signal based on the reserved carrier in the BWP via the communication unit.

18. The apparatus according to claim 17, wherein

the first CRB is a start CRB of a carrier bandwidth; or
the first CRB is a CRB 0; or
the first CRB is a start CRB of the BWP.

19. The apparatus according to claim 17 or 18, wherein the index that is of the subcarrier in the TR pattern and that is based on the first CRB is determined based on the index that is of the subcarrier in the TR pattern and that is in the TR pattern, a value obtained by subtracting an index of the first CRB from an index of a second CRB, and a quantity of subcarriers comprised in one CRB, a location of a $1^{st}$ subcarrier of the second CRB is the same as a location of a subcarrier A, and the subcarrier A is a subcarrier whose index is 0 or 1 in a counting manner of the TR pattern.

20. The apparatus according to claim 19, wherein

the index that is of the subcarrier in the TR pattern and that is in the TR pattern counts from 0, and an index $f_i^{CRB}$ that is of an $i^{th}$ subcarrier $f_i$ in the TR pattern and that is based on the first CRB satisfies the following formula, wherein $f_i$ is an index of the subcarrier in the TR pattern, and i is an integer greater than 0:

$$f_i^{CRB} = f_i + a*b,$$

wherein

a is the value obtained by subtracting the index of the first CRB from the index of the second CRB, and b is the quantity of subcarriers comprised in one CRB; or

the index that is of the subcarrier in the TR pattern and that is in the TR pattern counts from 1, and an index $f_i^{CRB}$ that is of an $i^{th}$ subcarrier $f_i$ in the TR pattern and that is based on the first CRB satisfies the following formula, wherein $f_i$ is an index of the subcarrier in the TR pattern, and i is an integer greater than 0:

$$f_i^{CRB} = f_i + a*b - 1,$$

wherein
a is the value obtained by subtracting the index of the first CRB from the index of the second CRB, and b is the quantity of subcarriers comprised in one CRB.

21. The apparatus according to any one of claims 17 to 20, wherein when determining the reserved carrier in the bandwidth part BWP based on the tone reservation TR pattern and the first correspondence, the processing unit is specifically configured to:

determine, based on the first correspondence, an index that is of each subcarrier in the TR pattern and that is based on the first CRB;
determine an index that is of a subcarrier in the BWP and that is based on the first CRB; and
determine the reserved carrier in the BWP based on the index that is of each subcarrier in the TR pattern and that is based on the first CRB and the index that is of the subcarrier in the BWP and that is based on the first CRB.

22. The apparatus according to any one of claims 17 to 21, wherein the processing unit is further configured to:
before outputting the time domain signal based on the reserved carrier in the BWP, determine a size of a transport block, wherein the transport block does not comprise a resource element RE corresponding to the reserved carrier in the BWP.

23. The apparatus according to any one of claims 17 to 22, wherein the processing unit is further configured to:

   before outputting the time domain signal based on the reserved carrier in the BWP, map physical channel information to at least one RE, wherein
   the at least one RE satisfies the following condition: the at least one RE does not overlap the RE corresponding to the reserved carrier in the BWP.

24. The apparatus according to any one of claims 17 to 23, wherein the processing unit is further configured to:
   before outputting the time domain signal based on the reserved carrier in the BWP, perform discrete fourier transform DFT/inverse discrete fourier transform IDFT modulation on a subcarrier, other than the reserved carrier in the BWP, that is comprised in a carrier bandwidth in which the BWP is located, to obtain the time domain signal.

25. A communication apparatus, comprising:

   a communication unit, configured to receive a time domain signal; and
   a processing unit, configured to: determine a reserved carrier in a bandwidth part BWP based on first information or second information, wherein the first information is from a transmitting end and indicates the reserved carrier in the BWP, the second information comprises a tone reservation TR pattern and a first correspondence, the TR pattern comprises a set of subcarriers used as reserved carriers, and the first correspondence is a correspondence between an index that is of a subcarrier in the TR pattern and that is in the TR pattern and an index that is of the subcarrier in the TR pattern and that is based on a first common resource block CRB; and
   parse the time domain signal based on the reserved carrier in the BWP.

26. The apparatus according to claim 25, wherein

   the first CRB is a start CRB of a carrier bandwidth; or
   the first CRB is a CRB whose index is 0; or
   the first CRB is a start CRB of the BWP.

27. The apparatus according to claim 25 or 26, wherein the index that is of the subcarrier in the TR pattern and that is based on the first CRB is determined based on the index that is of the subcarrier in the TR pattern and that is in the TR pattern, a value obtained by subtracting an index of the first CRB from an index of a second CRB, and a quantity of subcarriers comprised in one CRB, a location of a 1st subcarrier of the second CRB is the same as a location of a subcarrier A, and the subcarrier A is a subcarrier whose index is 0 or 1 in a counting manner of the TR pattern.

28. The apparatus according to claim 27, wherein the index that is of the subcarrier in the TR pattern and that is in the TR pattern counts from 0, and an index $f_i^{\text{first }CRB}$ that is of an $i^{\text{th}}$ subcarrier $f_i$ in the TR pattern and that is based on the first CRB satisfies the following formula, wherein $f_i$ is an index of the subcarrier in the TR pattern, and i is an integer greater than 0:

$$f_i^{\text{first }CRB} = f_i + a*b,$$

   wherein

   a is the value obtained by subtracting the index of the first CRB from the index of the second CRB, and b is the quantity of subcarriers comprised in one CRB; or
   the index that is of the subcarrier in the TR pattern and that is in the TR pattern counts from 1, and an index $f_i^{\text{first }CRB}$ that is of an $i^{\text{th}}$ subcarrier $f_i$ in the TR pattern and that is based on the first CRB satisfies the following formula, wherein $f_i$ is an index of the subcarrier in the TR pattern, and i is an integer greater than 0:

$$f_i^{\text{first }CRB} = f_i + a*b - 1,$$

   wherein
   a is the value obtained by subtracting the index of the first CRB from the index of the second CRB, and b is the quantity of subcarriers comprised in one CRB.

29. The apparatus according to any one of claims 25 to 28, wherein the determining a reserved carrier in a BWP based on second information comprises:

    determining, based on the first correspondence, an index that is of each subcarrier in the TR pattern and that is based on the first CRB; and
    determining the reserved carrier in the BWP based on the index that is of each subcarrier in the TR pattern and that is based on the first CRB and an index that is of a subcarrier comprised in the BWP and that is based on the first CRB.

30. The apparatus according to any one of claims 25 to 29, wherein the parsing the time domain signal based on the reserved carrier in the BWP comprises:
    parsing the time domain signal based on a subcarrier, other than the reserved carrier in the BWP, that is comprised in a carrier bandwidth in which the BWP is located.

31. The apparatus according to any one of claims 25 to 30, wherein after the parsing the time domain signal based on the reserved carrier in the BWP, the apparatus further comprises:
    performing resource demapping on at least one resource element RE based on the reserved carrier in the BWP, wherein the at least one RE satisfies the following condition: the at least one RE does not overlap an RE corresponding to the reserved carrier in the BWP.

32. The apparatus according to any one of claims 25 to 31, wherein after the parsing the time domain signal based on the reserved carrier in the BWP, the apparatus further comprises:

    determining a size of a transport block based on the reserved carrier in the BWP, wherein the transport block does not comprise the resource element RE corresponding to the reserved carrier in the BWP; and
    performing channel decoding based on the transport block size.

33. A communication apparatus, comprising a processor, wherein the processor is configured to run a group of programs, to enable the method according to any one of claims 1 to 8 to be performed, or the method according to any one of claims 9 to 16 to be performed.

34. The apparatus according to claim 33, further comprising a memory, wherein the memory stores the programs run by the processor.

35. The apparatus according to claim 33 or 34, wherein the apparatus is a chip or an integrated circuit.

36. A computer-readable storage medium, wherein the computer storage medium stores computer-readable instructions, and when the computer-readable instructions are run on a communication apparatus, the method according to any one of claims 1 to 8 is performed, or the method according to any one of claims 9 to 16 is performed.

37. A computer program product, wherein when the computer program product runs on a device, the device is enabled to perform the method according to any one of claims 1 to 8 or the method according to any one of claims 9 to 16.

38. A communication system, wherein the system comprises the apparatus according to any one of claims 17 to 24 and the apparatus according to any one of claims 25 to 32.

FIG. 1

FIG. 2

FIG. 3

FIG. 4

```
┌─────────────────────┐                          ┌─────────────────────┐
│  Transmitting end   │                          │   Receiving end     │
└─────────────────────┘                          └─────────────────────┘
           │                                                 │
┌─────────────────────┐                                      │
│ S501: Determine a   │                                      │
│ reserved carrier in │                                      │
│ a BWP based on a TR │                                      │
│ pattern and a first │                                      │
│ correspondence      │                                      │
└─────────────────────┘                                      │
           │                                                 │
┌─────────────────────┐        ┌─────────────────────┐       │
│ S502: Output a time │        │ S502: Receive the   │       │
│ domain signal based │───────▶│ time domain signal  │       │
│ on the reserved     │        │                     │       │
│ carrier in the BWP  │        └─────────────────────┘       │
└─────────────────────┘                  │                   │
           │                 ┌─────────────────────┐          │
           │                 │ S503: Determine the │          │
           │                 │ reserved carrier in │          │
           │                 │ the BWP             │          │
           │                 └─────────────────────┘          │
           │                           │                      │
           │                 ┌─────────────────────┐          │
           │                 │ S504: Parse the     │          │
           │                 │ time domain signal  │          │
           │                 │ based on the        │          │
           │                 │ reserved carrier in │          │
           │                 │ the BWP             │          │
           │                 └─────────────────────┘          │
```

FIG. 5

FIG. 6

CRB 0

BWP

Carrier bandwidth

Reserved carrier in the BWP

Reserved carrier
included in TR

Frequency

FIG. 7

CRB 0

BWP

Carrier bandwidth

Reserved carrier in the BWP

Reserved carrier
included in TR

Frequency

FIG. 8

Communication apparatus

Communication unit — 901

Processing unit — 902

FIG. 9

Communication apparatus

Communication
interface — 1002

Processor — 1001

— 1004

— 1003

Memory

FIG. 10

## INTERNATIONAL SEARCH REPORT

International application No.

**PCT/CN2023/100494**

| A. | CLASSIFICATION OF SUBJECT MATTER |
|---|---|

H04L5/00(2006.01)i

According to International Patent Classification (IPC) or to both national classification and IPC

| B. | FIELDS SEARCHED |
|---|---|

Minimum documentation searched (classification system followed by classification symbols)

IPC: H04L,H04W

Documentation searched other than minimum documentation to the extent that such documents are included in the fields searched

Electronic data base consulted during the international search (name of data base and, where practicable, search terms used)

CNTXT, CNKI, ENTXTC, ENTXT, VCN, VEN, DWPI, 3GPP: 载波, 音调, 预留, 保留, 图样, 图案, 图形, 部分带宽, 带宽部分, 载波, 集, 通用资源块, 公共资源块, 索引, 信号, carrier, tone, reservation, TR, pattern, graphic, partial bandwidth, bandwidth part, BWP, set, common resource block, CRB, index, signal

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2021377813 A1 (QUALCOMM INC.) 02 December 2021 (2021-12-02) claims 1-2, and description, paragraphs 0003-0045 and 0088-0184 | 1-38 |
| A | WO 2022081722 A1 (IDAC HOLDINGS, INC.) 21 April 2022 (2022-04-21) entire document | 1-38 |
| A | CN 110786045 A (ELECTRONICS AND TELECOMMUNICATIONS RESEARCH INSTITUTE) 11 February 2020 (2020-02-11) entire document | 1-38 |
| A | US 2022174552 A1 (LG ELECTRONICS INC.) 02 June 2022 (2022-06-02) entire document | 1-38 |
| A | CN 110430617 A (HUAWEI TECHNOLOGIES CO., LTD.) 08 November 2019 (2019-11-08) entire document | 1-38 |
| A | KR 20180129620 A (KT CORP.) 05 December 2018 (2018-12-05) entire document | 1-38 |

☑ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 August 2023** | **21 August 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/100494** |

**C.      DOCUMENTS CONSIDERED TO BE RELEVANT**

| Category* | Citation of document, with indication, where appropriate, of the relevant passages | Relevant to claim No. |
| --- | --- | --- |
| A | VIVO. "Discussion on DL RS for NR positioning" *3GPP TSG RAN WG1 #98bis R1-1910237*, 20 October 2019 (2019-10-20), entire document | 1-18 |

Form PCT/ISA/210 (second sheet) (July 2022)

INTERNATIONAL SEARCH REPORT
Information on patent family members

International application No.

**PCT/CN2023/100494**

| Patent document cited in search report | | | Publication date (day/month/year) | Patent family member(s) | | | Publication date (day/month/year) |
|---|---|---|---|---|---|---|---|
| US | 2021377813 | A1 | 02 December 2021 | None | | | |
| WO | 2022081722 | A1 | 21 April 2022 | KR | 20230084577 | A | 13 June 2023 |
| CN | 110786045 | A | 11 February 2020 | EP | 3641393 | A2 | 22 April 2020 |
| | | | | US | 2020344034 | A1 | 29 October 2020 |
| | | | | JP | 2020523942 | A | 06 August 2020 |
| | | | | US | 2022278816 | A1 | 01 September 2022 |
| | | | | KR | 20180137415 | A | 27 December 2018 |
| | | | | WO | 2018230965 | A2 | 20 December 2018 |
| | | | | IN | 201917052020 | A | 31 January 2020 |
| US | 2022174552 | A1 | 02 June 2022 | JP | 2022545384 | A | 27 October 2022 |
| | | | | WO | 2021034054 | A1 | 25 February 2021 |
| | | | | KR | 20220038088 | A | 25 March 2022 |
| | | | | EP | 3996415 | A1 | 11 May 2022 |
| | | | | CN | 114245991 | A | 25 March 2022 |
| CN | 110430617 | A | 08 November 2019 | JP | 2021503813 | A | 12 February 2021 |
| | | | | US | 2020280524 | A1 | 03 September 2020 |
| | | | | WO | 2019096272 | A1 | 23 May 2019 |
| | | | | ES | 2925203 | T3 | 14 October 2022 |
| | | | | EP | 3709550 | A1 | 16 September 2020 |
| | | | | BR | 112020009455 | A2 | 13 October 2020 |
| | | | | CN | 109802803 | A | 24 May 2019 |
| | | | | IN | 202037024859 | A | 24 July 2020 |
| | | | | VN | 72222 | A | 25 August 2020 |
| KR | 20180129620 | A | 05 December 2018 | KR | 20200074932 | A | 25 June 2020 |
| | | | | CN | 108966181 | A | 07 December 2018 |
| | | | | US | 2018343089 | A1 | 29 December 2018 |

Form PCT/ISA/210 (patent family annex) (July 2022)

**REFERENCES CITED IN THE DESCRIPTION**

**Patent documents cited in the description**

• CN 202210834017